# EUROPEAN PATENT APPLICATION

(11) **EP 4 825 207 A1**
(43) Date of publication of application: **21.10.2026**
(21) Application number: 23961462.1
(22) Date of filing: 13.12.2023
(51) Int. Cl.: A24F 40/40, A24F 40/95

(54) **AEROSOL GENERATION DEVICE**

(71) Applicant: Japan Tobacco Inc., Tokyo 105-6927 (JP)
(72) Inventor: ARADACHI Takao, Tokyo 130-8603 (JP); AOYAMA Tatsunari, Tokyo 130-8603 (JP)
(74) Representative: Hoffmann Eitle
(86) International application number: PCT/JP2023/044708
(87) International publication number: WO 2025/126396

(57) **Abstract**

An inhalation device (100), which is an example of an aerosol generation device, comprises: a power source unit (111) configured to be capable of supplying power to a heater unit (60) for heating an aerosol source; a main body side board unit (90) on which an MCU (1161) controlling the supply of power to the heater unit (60) is mounted; and a case (case 20) having a power source accommodating portion (200) and a board accommodating portion (210). the case (20) includes a connection portion (connection portion 20x) to which the power source unit (111) is connected, and a regulator (regulator 29) restricting intrusion of the power source unit (111) into the board accommodating portion (210). The regulator (29) is arranged at least between the power source accommodating portion (200) and a mounting section of the MCU (1161) when viewed from the power source accommodating portion (200). The power source unit (111) has a battery (1111) and a protective circuit that includes a protective IC (1114) and a switch circuit (1113), and is removably arranged in the power source accommodating portion (200).

## Description

### TECHNICAL FIELD

The present disclosure relates to an aerosol generation device.

### BACKGROUND ART

Aerosol generation devices that generate an aerosol to which a flavor component has been added and enable a user to inhale the generated aerosol, for example, are conventionally known. Such aerosol generation devices typically generate an aerosol by heating an aerosol source using a heating unit, which is an electrical resistance type or inductive heating type heater.

The battery of the aerosol generation device degrades with age and usage. In Patent Document 1 below, an electronic cigarette device is disclosed which allows the battery to be replaced. Patent Document 2 below also indicates that a battery supported by a battery support is arranged to face a substrate exposed in a case.

### CITATION LIST

### PATENT LITERATURE

PTL 1: CN 107373765 A
PTL 2: JP 2022-524791 A

### SUMMARY OF INVENTION

### PROBLEM TO BE SOLVED BY THE INVENTION

However, the invention described in the above Patent Document 1 was not provided with a protective circuit in the battery, and there was room for improvement in safety. In the case of the invention described in Patent Document 2, the board is exposed within the case and the battery cannot be replaced by a user. In other words, when replacing the battery, there was a risk that the battery would come into contact with the control element mounted on the substrate, and there was room for improvement in safety.

The present disclosure provides an aerosol generation device with which it is possible to safely perform a replacement of the power source unit.

### SOLUTION TO PROBLEM

One aspect of the present disclosure is:
an aerosol generation device for generating an aerosol by heating an aerosol source, the aerosol generation device comprising:
a power source unit configured to be capable of supplying power to a heating unit;
a board on which a control element controlling the supply of power to the heating unit is mounted; and
a case having a power source accommodating portion accommodating the power source unit and a board accommodating portion accommodating the board, wherein
the case includes
a connection portion connected to which the power source unit is connected, and
a regulator restricting intrusion of the power source unit into the board accommodating portion,
the regulator is arranged at least between the power source accommodating portion and a mounting section of the control element when viewed from the power source accommodating portion, and
the power source unit has a battery and a protective circuit, and is removably arranged in the power source accommodating portion.

### ADVANTAGEOUS EFFECTS OF INVENTION

According to the present disclosure, the power source unit can be safely replaced.

### BRIEF DESCRIPTION OF DRAWINGS

Fig. 1 is a schematic diagram illustrating a first configuration example of an inhalation device.
Fig. 2 is a schematic diagram illustrating a second configuration example of an inhalation device.
Fig. 3 is a diagram showing an example of the external configuration of the inhalation device 100.
Fig. 4 is a diagram showing a first example of an insertion/removal aspect of the power source unit 111.
Fig. 5 is a diagram showing a second example of the insertion/removal aspect of the power source unit 111.
Fig. 6 is a diagram showing a third example of the insertion/removal aspect of the power source unit 111.
Fig. 7 is a diagram showing a fourth example of the insertion/removal aspect of the power source unit 111.
Fig. 8 is a diagram showing an example of the configuration of the power source unit 111 and a control unit 116.
Fig. 9 is a diagram showing a first example of a circuit configuration of the inhalation device 100.
Fig. 10 is a diagram showing a second example of the circuit configuration of the inhalation device 100.
Fig. 11 is a diagram showing a third example of the circuit configuration of the inhalation device 100.
Fig. 12 is a diagram showing a fourth example of the circuit configuration of the inhalation device 100.
Fig. 13 is a diagram showing a fifth example of the circuit configuration of the inhalation device 100.

### EMBODIMENTS OF THE INVENTION

An embodiment of an aerosol generation device according to the present disclosure will be described in detail below with reference to the drawings. The drawings shall be viewed in the orientation of the reference signs. The embodiment described below is an exemplary case in which the aerosol generation device according to the present disclosure is applied to an inhalation device. It should be noted that not all of the features described in the following embodiments are essential to the present disclosure. In addition, two or more of the plurality of features described in the following embodiment may be combined in any way. Furthermore, hereinafter, identical or similar elements may be assigned identical or similar reference signs, and descriptions thereof may be omitted or simplified as appropriate.

### 1. Configuration example of inhalation device

The inhalation device, which is one example of the aerosol generation device of the present disclosure, is a device for generating a substance to be inhaled by a user. Hereinafter, the substance generated by the inhalation device will be described as being an aerosol. Alternatively, the substance generated by the inhalation device may be a gas.

### <1-1. First configuration example of inhalation device>

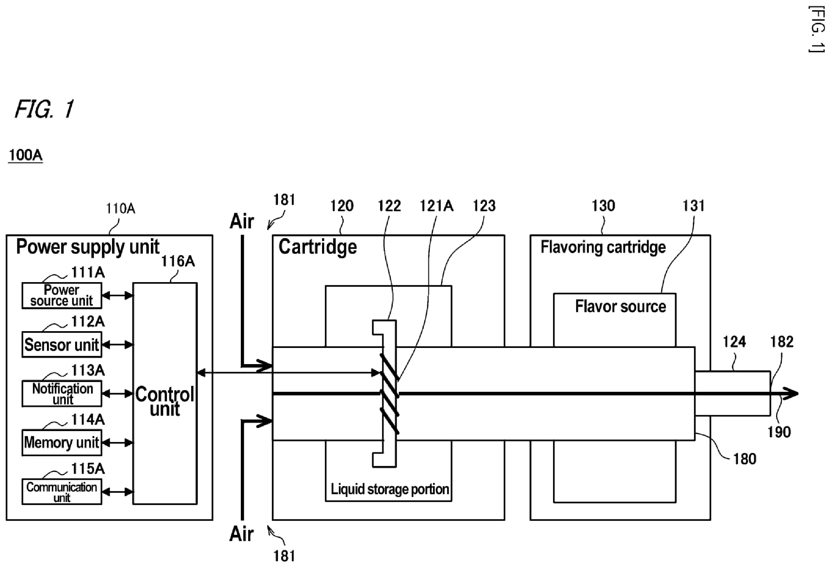

Fig. 1 is a schematic diagram schematically showing a first configuration example of the inhalation device. As shown in fig. 1, an inhalation device 100A according to this configuration example includes a power supply unit 110A, a cartridge 120, and a flavoring cartridge 130. The power supply unit 110A comprises a power source unit 111A, a sensor unit 112A, a notification unit 113A, a memory unit 114A, a communication unit 115A, and a control unit 116A. The cartridge 120 includes a heating unit 121A, a liquid guiding portion 122, and a liquid storage portion 123. The flavoring cartridge 130 comprises a flavor source 131 and a mouthpiece 124. An air flow path 180 is formed in the cartridge 120 and the flavoring cartridge 130.

The power source unit 111A stores electrical power. The power source unit 111A then supplies the electrical power to each component of the inhalation device 100A in accordance with control performed by the control unit 116A. Furthermore, the power source unit 111A is configured to be chargeable by means of power received from an external power source. The external power source may for example be an AC adapter (AC: alternating current), a mobile charger, a PC (personal computer), or the like. The power source unit 111A may be configured, for example, by a rechargeable battery such as a lithium ion secondary battery.

The cartridge 111A is insertable in and removable from the power supply unit 110A. That is, the inhalation device 100A enables the user to replace the power source unit 111A, such as by removing an old power source unit 111A from the power supply unit 110A and installing a new power source unit 111A in the power supply unit 110A. It should be noted that specific configuration examples of the power source unit 111 including the power source unit 111A will be discussed hereinafter, and will therefore not be described here.

The sensor unit 112A acquires various types of information relating to the inhalation device 100A. The sensor unit 112A is configured by, for example, a pressure sensor such as a capacitor microphone, a flow rate sensor or a temperature sensor, etc., and acquires values associated with inhalation by a user.

As an example, the sensor unit 112A may include a pressure sensor (also referred to as a "puff sensor") capable of detecting a change in pressure (also referred to hereinafter as "internal pressure") in the inhalation device 100A caused by inhalation by the user. As another example, the sensor unit 112A may include a flow sensor capable of detecting a flow rate caused by inhalation by the user (hereinafter simply referred to as "flow rate"). As another example, the sensor unit 112A may include a temperature sensor (also referred to as a "puff thermistor") capable of detecting the temperature of the heating unit 121A or the temperature around the heating unit 121A.

Furthermore, the sensor unit 112A may include a voltage sensor capable of detecting a terminal voltage which of the power source unit 111A. The sensor unit 112A may further include a temperature sensor capable of detecting the temperature of the power source unit 111A.

Furthermore, the sensor unit 112A may comprise an input device, such as an operation button or an operation switch, for accepting input of information from the user.

The notification unit 113A notifies the user of information. The notification unit 113A may, for example, be configured by a light-emitting device that emits light, a display device that displays images, a sound output device that outputs sound, or a vibration device that vibrates, etc. Here, the light-emitting device may be realized by a light-emitting element such as an LED (Light-Emitting Diode), and a drive circuit for causing the light-emitting element to emit light, and the like. Furthermore, the display device may be a liquid crystal display or an OLED display (OLED: Organic Light-Emitting Diode). The sound output device may be a speaker, for example. The vibration device may be a vibrator comprising a motor and an eccentric weight attached to a rotary shaft of the motor, for example.

The memory unit 114A stores various information (e.g., programs and data) for operation of the inhalation device 100A. The memory unit 114A may be configured by a non-volatile storage medium such as a flash memory, for example.

The communication unit 115A is a communication interface capable of performing communication conforming to any wired or wireless communication standard. Examples of communication standards that may be used include standards that employ Wi-Fi (registered trademark), Bluetooth (registered trademark), BLE (Bluetooth Low Energy) (registered trademark), NFC (Near-Field Communication), or LPWA (Low Power Wide Area), for example.

The control unit 116A functions as an arithmetic processing device and a control device, and controls overall operation within the inhalation device 100A in accordance with various programs stored in the memory unit 114A, etc. For example, the control unit 116A controls the supply of electricity (power supply) from the power source unit 111A to each component (e.g., the heating unit 121A to be described later), and controls charging of the power source unit 111A by means of power received from the external power source. The control unit 116A is realized by a CPU (central processing unit) or an electronic circuit such as a microprocessor (also referred to as an "MCU (micro controller unit)"), for example.

The liquid storage portion 123 stores an aerosol source. The aerosol source is atomized to generate an aerosol. The aerosol source is a polyhydric alcohol such as glycerol or propylene glycol, or a liquid such as water, for example. The aerosol source may include a tobacco-derived or non-tobacco-derived flavor component. If the inhalation device 100A is a medical inhaler such as a nebulizer, the aerosol source may include a drug.

The liquid guiding portion 122 guides the aerosol source, which is a liquid stored in the liquid storage portion 123, from the liquid storage portion 123, and holds the aerosol source. The liquid guiding portion 122 is, for example, a wick formed by twisting either a fibrous material such as glass fibers or a porous material such as a porous ceramic. In this case, the aerosol source stored in the liquid storage portion 123 is guided by the capillary effect of the wick.

The heating unit 121A heats the aerosol source to atomize the aerosol source, thereby generating the aerosol, for example. The heating unit 121A is formed by any material, such as a metal or polyimide, in any shape, such as coiled, film-like or blade-like. In the example shown in fig. 1, the heating unit 121A is configured as a coil obtained by winding a heat generating resistor such as nichrome or stainless steel, and is wrapped around the liquid guiding portion 122. When the heating unit 121A generates heat, the aerosol source held in the liquid guiding portion 122 is heated and atomized, generating the aerosol. The heating unit 121A generates heat when supplied with electricity from the power source unit 111A.

As an example, the supply of electricity to the heating unit 121A from the power source unit 111A may be implemented when the sensor unit 112A has detected that the user has started inhaling and/or that predetermined information has been input. The supply of electricity to the heating unit 121A may then be stopped when the sensor unit 112A has detected that the user has finished inhaling and/or that predetermined information has been input.

Moreover, the heating unit 121A may be configured to generate an aerosol by means of vibration or induction heating. When the aerosol is generated by means of vibration, the inhalation device 100A comprises a vibration unit as the heating unit 121A. For example, the vibration unit is configured by a plate-shaped member comprising a piezoelectric ceramic functioning as an ultrasonic vibrator. When the vibration unit vibrates, the aerosol source which has been guided to a surface of the vibration unit by means of the liquid guiding portion 122 is then atomized by means of ultrasound generated as the vibration unit vibrates, thereby generating the aerosol.

Furthermore, when the aerosol is generated by means of induction heating, the inhalation device 100A comprises a susceptor and an electromagnetic induction source as the heating unit 121A. The susceptor is made of an electrically conductive material, such as a metal, and generates heat by means of electromagnetic induction. Furthermore, the susceptor is disposed adjacent to the liquid guiding portion 122. As an example, the susceptor is formed by a metallic conducting wire and is wound around the liquid guiding portion 122. The electromagnetic induction source causes the susceptor to generate heat by electromagnetic induction. The electromagnetic induction source is formed by a coiled conducting wire, for example, and generates a magnetic field when supplied with an AC current from the power source unit 111A. When a magnetic field is generated, eddy currents are generated in the susceptor, and Joule heat is generated. The aerosol source held in the liquid guiding portion 122 is then heated by this Joule heat and atomized, generating the aerosol.

The flavor source 131 is a component for imparting a flavor component to the aerosol. The flavor source 131 includes tobacco-derived or non-tobacco-derived flavor components. The flavor source 131 may be, for example, a tobacco-derived substance such as cut tobacco, or a processed product obtained by molding a tobacco raw material into a granular form, a sheet form, or a powder form. Furthermore, the flavor source 131 may also include non-tobacco-derived materials made from plants other than tobacco (e.g., mint and herbs, etc.). As one example, the flavor source 131 may contain a flavor component such as menthol. Furthermore, the flavor source 131 may be a stick-type member. When the inhalation device 100A is a medical inhaler, the flavor source 131 may contain a drug to be inhaled by a patient. It should be noted that the flavor source 131 is not limited to a solid, and may equally be a polyhydric alcohol such as glycerol or propylene glycol, or a liquid containing a flavor component such as water, for example. Furthermore, the flavor source 131 may be disposed inside a container such as a capsule.

The air flow path 180 is a flow path for air to be inhaled by the user. The air flow path 180 has a tubular structure with an air inflow hole 181, which is an inlet for air into the air flow path 180, and an air outflow hole 182, which is an outlet for air from the air flow path 180, at the two ends thereof. Part way along the air flow path 180, the liquid guiding portion 122 is disposed on the upstream side (the side closer to the air inflow hole 181), and the flavor source 131 is disposed on the downstream side (the side closer to the air outflow hole 182). Air that flows in through the air inflow hole 181 as the user inhales is mixed with the aerosol generated by the heating unit 121A and is transported through the flavor source 131 to the air outflow hole 182, as shown by the arrow 190. When the mixed fluid of aerosol and air passes through the flavor source 131, the flavor component contained in the flavor source 131 is added to the aerosol.

The mouthpiece 124 is a member that is held in the user's mouth during inhalation. The air outflow hole 182 is disposed in the mouthpiece 124. The user holds the mouthpiece 124 in their mouth and inhales, making it possible to draw the mixed fluid of aerosol and air into the oral cavity.

A configuration example of the inhalation device 100A has been described above. The inhalation device 100A is, of course, not limited to the configuration described above, and various configurations, such as those illustrated below by way of example, may be adopted.

As an example, the inhalation device 100A need not include the flavoring cartridge 130. In this case, the cartridge 120 is provided with the mouthpiece 124.

As another example, the inhalation device 100A may further include a flavor source heating unit (not depicted) for heating the flavor source 131. The flavor source heating unit is configured in a film shape and is disposed so as to cover the outer periphery of the flavor source 131, for example. The flavor source heating unit then generates heat when supplied with power from the power source unit 111A, heating the flavor source 131 from the outer periphery thereof. It should be noted that the flavor source heating unit may also be configured with a blade-like form, piercing the flavor source 131 to heat the flavor source 131 from the inside, for example. Furthermore, the flavor source heating unit may be configured to heat the flavor source 131 by means of vibration or induction heating. Providing such a flavor source heating unit makes it possible to increase the temperature of the flavor source 131 and to increase the amount of flavor component added to the aerosol, as compared to a case in which the flavor source heating unit is not provided.

Furthermore, as another example, the inhalation device 100A may include a plurality of types of aerosol sources. A plurality of types of aerosol generated from the plurality of types of aerosol sources may be mixed within the air flow path 180 to cause a chemical reaction, thereby generating yet more other types of aerosol.

Furthermore, the means for atomizing the aerosol source is not limited to heating by the heating unit 121A. For example, the means for atomizing the aerosol source may be vibration atomization or induction heating.

### <1-2. Second configuration example of inhalation device>

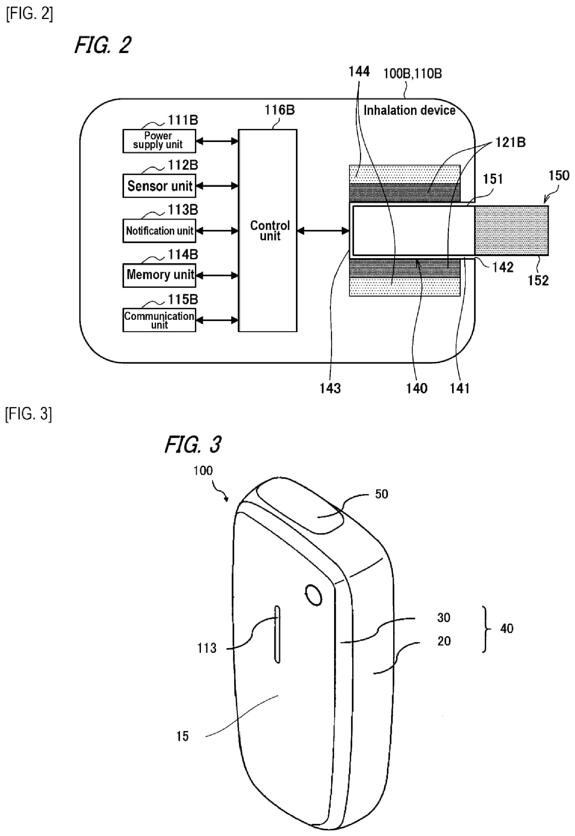

Fig. 2 is a schematic diagram schematically showing a second configuration example of the inhalation device. As shown in fig. 2B, an inhalation device 100B according to this configuration example comprises a power source unit 111B, a sensor unit 112B, a notification unit 113B, a memory unit 114B, a communication unit 115B, a control unit 116B, a heating unit 121B, an accommodating portion 140, and a heat insulating portion 144.

The power source unit 111B, sensor unit 112B, notification unit 113B, memory unit 114B, communication unit 115B, and control unit 116B are each substantially the same as the corresponding component included in the inhalation device 100A described above. Moreover, in the case of the inhalation device 100B shown in fig. 2B, the inhalation device 100B itself may also be referred to as the power supply unit 110B. That is, in this embodiment, the power source unit 111B is removably provided to the power supply unit 110B (in other words, the inhalation device 100B) such that the user can replace the power source unit 111B as required.

The accommodating portion 140 has an internal space 141, and holds a stick-type substrate 150 while accommodating a portion of the stick-type substrate 150 in the internal space 141. The accommodating portion 140 has an opening 142 allowing the internal space 141 to communicate with the outside, and accommodates the stick-type substrate 150 which has been inserted into the internal space 141 from the opening 142. For example, the accommodating portion 140 is a cylindrical body comprising the opening 142 and a bottom portion 143 serving as a bottom surface, and defines a columnar internal space 141. An air flow path for supplying air to the internal space 141 is connected to the accommodating portion 140. An air inflow hole, which is an inlet for air into the air flow path, is disposed in a side surface of the inhalation device 100, for example. An air outflow hole, which is an outlet for air from the air flow path to the internal space 141, is disposed in the bottom portion 143, for example.

The stick-type substrate 150 comprises a substrate portion 151 and a mouthpiece portion 152. The substrate portion 151 contains an aerosol source. The aerosol source includes a tobacco-derived or non-tobacco-derived flavor component. If the inhalation device 100B is a medical inhaler such as a nebulizer, the aerosol source may include a drug. The aerosol source may, for example, be a liquid such as water or a polyhydric alcohol, for example glycerol or propylene glycol, containing the tobacco-derived or non-tobacco-derived flavor component, or may be a solid including the tobacco-derived or non-tobacco-derived flavor component. In a state in which the stick-type substrate 150 is held in the accommodating portion 140, at least part of the substrate portion 151 is accommodated in the internal space 141, and at least part of the mouthpiece portion 152 protrudes from the opening 142. Then, when the user holds the mouthpiece portion 152 protruding from the opening 142 in their mouth and inhales, air flows into the internal space 141 via the air flow path which is not depicted, and reaches the inside of the user's mouth together with the aerosol generated from the substrate portion 151.

In the example shown in fig. 2, the heating unit 121B is configured as a film heater formed by laying out a conductive track afforded by a heating resistive element having a correlation between electrical resistance value and temperature, and is arranged to cover the outer circumference of the accommodating portion 140. Then, when the heating unit 121B generates heat, the substrate portion 151 of the stick-type substrate 150 is heated from the outer periphery, generating the aerosol. It should be noted that a heat generating resistor the same as that of the heating unit 121A described above may be used as the heat generating resistor of the heating unit 121B.

The heat insulating portion 144 prevents heat transfer from the heating unit 121B to other components. For example, the heat insulating portion 144 is configured from a vacuum heat insulating material or an aerogel heat insulating material, or the like.

A configuration example of the inhalation device 100B has been described above. The inhalation device 100B is, of course, not limited to the configuration described above, and various configurations, such as those illustrated below by way of example, may be adopted.

As one example, the heating unit 121B may be configured with a blade-like form and may be arranged so as to protrude into the internal space 141 from the bottom portion 143 of the accommodating portion 140. In that case, the blade-like heating unit 121B is inserted into the substrate portion 151 of the stick-type substrate 150 and heats the substrate portion 151 of the stick-type substrate 150 from the inside. As another example, the heating unit 121B may be arranged so as to cover the bottom portion 143 of the accommodating portion 140. Furthermore, the heating unit 121B may be configured from a combination of two or more from among a first heating unit covering the outer circumference of the accommodating portion 140, a blade-like second heating unit, and a third heating unit covering the bottom portion 143 of the accommodating portion 140.

As another example, the accommodating portion 140 may include an opening and closing mechanism such as a hinge for opening and closing part of an outer casing that forms the internal space 141. Then, by opening and closing the outer casing, the accommodating portion 140 may accommodate and grip the stick-type substrate 150 that has been inserted into the internal space 141. In this case, the heating unit 121B may be provided on the clamping part of the accommodating portion 140, and may heat the stick-shaped substrate 150 while pressing the same.

Furthermore, the means for atomizing the aerosol source is not limited to heating by the heating unit 121B. For example, the means for atomizing the aerosol source may be induction heating. In that case, the inhalation device 100B comprises at least an electromagnetic induction source such as a coil for generating a magnetic field, instead of the heating unit 121B. A susceptor which generates heat by means of induction heating may be provided in the inhalation device 100B, or may be contained in the stick-type substrate 150.

Furthermore, the inhalation device 100B may additionally include the heating unit 121A, the liquid guiding portion 122, the liquid storage portion 123, and the air flow passage 180 according to the first configuration example, and the air flow passage 180 may supply air to the internal space 141. In this case, the mixed fluid of the aerosol generated by the heating unit 121A and air flows into the internal space 141 and is further mixed with the aerosol generated by the heating unit 121B, and reaches the oral cavity of the user.

Note that, hereinafter, the inhalation device 100A and the inhalation device 100B described above will also be referred to, without distinction, as the "inhalation device 100", and the power supply unit 110A and the power supply unit 110B will also be referred to, without distinction, as the "power supply unit 110". Similarly, the power source unit 111A and the power source unit 111B may be referred to as the "power source unit 111", the sensor unit 112A and the sensor unit 112B may be referred to as the "sensor unit 112", the notification unit 113A and the notification unit 113B may be referred to as the "notification unit 113", the memory unit 114A and the memory unit 114B may be referred to as the "memory unit 114", the communication unit 115A and the communication unit 115B may be referred to as the "communication unit 115", the control unit 116A and the control unit 116B may be referred to as the "control unit 116", and the heating unit 121A and the heating unit 121B may be referred to as the "heating unit 121".

### 2. Example of External Configuration of Inhalation Device

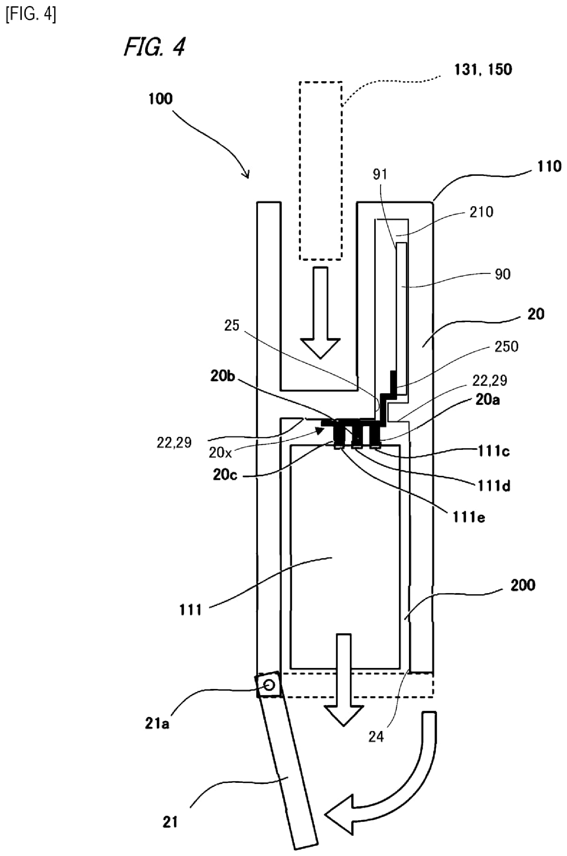

Fig. 3 is a diagram showing an example of the external configuration of the inhalation device 100. As shown in fig. 3, the inhalation device 100 comprises, for example, a case 20, and a shutter 50. The case 20 houses for example the power source unit 111 attached to the inhalation device 100, a main body side board unit 90 (see figs. 4 to 7) provided with an MCU, etc. for realizing the control unit 116, etc. The main body side board unit 90 is configured by mounting various elements including an IC constituting the control unit 116 on a printed wiring board (PWB). The main body side board unit 90 may be comprised of a single board or two or more boards connected by wires or cables. Also, the board constituting the main body side board unit 90 may be a rigid board, a flexible board, or a combination of these.

The case 20 is also fitted with a panel 30. The panel 30 is attached to the case 20 to configure an outermost housing 40 of the aerosol generation device 100. By including the panel 30, the inhalation device 100 can buffer the heat released to the outside even when the interior of the case 20 generates heat. In other words, the panel 30 functions to insulate heat generated from the interior of the case 20. Furthermore, the panel 30 is formed so that the surface is substantially curved, and defines the internal space together with the surface of the case 20 when attached to the case 20.

When a user presses on the surface of the panel 30 with their fingertips, the panel 30 deforms to form an indentation toward the case 20. As a result of this deformation of the panel 30, a projection provided on the surface of the panel 30 comes into contact with an operation button (not shown on the drawings) provided on the surface of the case 20, thereby pressing the operation button. In other words, the fingertip-pressed portion of the surface of the panel 30 constitutes an operation portion 15 that receives the user's operation. It should be noted that, in fig. 3, the portion denoted by the reference sign 113 is a portion that emits light, for example by transmitting light from a light emitting device provided in the case 20, and is an example of the previously described notification portion 113.

### 3. Insertion and Removal of the Power Source Unit

As previously mentioned, in the inhalation device 100, the power source unit 111 is removably provided in the case 20 of the inhalation device 100. Examples of aspects for insertion/removal of the power source unit 111 will now be described in detail. It should be noted that in the inhalation device 100, the insertion and removal direction of the flavor source 131 or the stick-type substrate 150 relative to the inhalation device 100 is the vertical direction, and in the inhalation device 100, the side in which the stick-type substrate 150 is inserted is defined as the upper side. In other words, the flavor source 131 or the stick-type substrate 150 is inserted into the inhalation device 100 from above. Also, the direction perpendicular to the vertical direction may be called the transverse direction, and a surface facing the transverse direction may be called a side surface.

Also, in the following, first to fourth examples of insertion/removal aspects of the power source unit 111 will be described, but the present disclosure is not limited to these examples. In other words, the power source unit 111 may be removably provided in the inhalation device 100 by aspects other than the first to fourth examples described below.

### 3-1.First Example of an Insertion and Removal Aspect of the Power Source Unit

Fig. 4 is a diagram showing a first example of an insertion/removal aspect of the power source unit 111. As shown in Fig. 4, the case 20 has a bottom wall portion 21 constituting at least a part of the lower surface of the case 20. The bottom wall portion 21 is provided in the case 20 so that it can be opened and closed about the axis of a hinge 21a that extends in a lateral direction. In other words, the lower surface of the case 20 is provided with an opening 24 configured to be opened and closed by the bottom wall portion 21.

In the lower region of the case 20, a power source accommodating portion 200 is formed that can accommodate the power source unit 111. When the bottom wall portion 21 is opened, the power source accommodating portion 200 is in communication with the outside of the case 20, allowing the power source unit 111 to be inserted into the power source accommodating portion 200 from the opening 24.

Also a board accommodating portion 210 is formed in the upper region of the case 20. Thus, in the insertion direction of the power source unit 111 inserted through the opening 24, the power source accommodating portion 200 and the board accommodating portion 210 are provided in this order from the opening 24. The board accommodating portion 210 accommodates the main body side board unit 90 comprising an IC (integrated circuit) constituting the control unit 116, etc. described above. The main body side board unit 90 is electrically connected to the power source unit 111 accommodated in the power source accommodating portion 200 via a flexible cable 250, for example. This allows power to be supplied from the power source unit 110 accommodated in the power source accommodating portion 200 to the main body side board unit 90.

The case 20 is provided with a positive terminal connection portion 20a a negative terminal connection portion 20b, and a temperature terminal connection portion 20c, which respectively correspond to a positive terminal 111c, a negative terminal 111d and a temperature terminal 111e of the power source unit 111. The positive electrode terminal connection portion 20a, the negative electrode terminal connection portion 20b, and the temperature terminal connection portion 20c electrically connect with the main body side board unit 90 via the flexible cable 250. In the example shown in fig. 4, the positive terminal 111c, the negative terminal 111d, and the temperature terminal 111e of the power source unit 111 are all provided on an upper surface of the power source unit 111, and the positive terminal connection portion 20a of the case 20, the negative terminal connection portion 20b, and the temperature terminal connection portion 20c are all provided to a top wall portion 22 of the power source accommodating portion 200.

The details of the positive terminal 111c, negative terminal 111d, and temperature terminal 111e will be described later, and a description will therefore not be given here. In the following, the positive terminal connection portion 20a, the negative terminal connection portion 20b, and the temperature terminal connection portion 20c may be collectively referred to as the "connection portion 20x". The connection portion 20x may also include terminals other than the positive terminal connection portion 20a, the negative terminal connection portion 20b, and the temperature terminal connection portion 20c.

When accommodated in the power source accommodating portion 200, the power source unit 111 is held by the bottom wall portion 21 and the top wall portion 22 of the power source accommodating portion 200. The power source unit is held in a state in which the positive terminal 111c of the power source unit 111 is electrically connected to the positive terminal connection portion 20a of the case 20, the negative terminal 111d is electrically connected to the negative terminal connection portion 20b, and the temperature terminal 111e is electrically connected to the temperature terminal connection portion 20c.

The top wall portion 22 is a dividing wall portion arranged between the power source accommodating portion 200 and the board accommodating portion 210 in the insertion direction of the power source unit 111. The top wall portion 22 is arranged between the power source accommodating portion 200 and the board accommodating portion 210 in the insertion direction of the power source unit 111, thereby preventing the power source unit 111 from entering the board accommodating portion 210 and contacting elements arranged on the main body side board unit 90. Thus, in the present example, the top wall portion 22 is an example of a regulator 29 of the present disclosure. In particular, the regulator 29 preferably covers the electrical connection of elements arranged on the main body side board unit 90 with the main body side board unit 90, more preferably covers the elements arranged on the main body side board unit 90, and even more preferably covers the whole main body side board unit 90, from at least the perspective of the power source accommodating portion 200.

Also in the present example, a communication portion 25 is formed in the top wall portion 22 in communication between the power source accommodating portion 200 and the board accommodating portion 210, and the flexible cable 250 is inserted through the communication portion 25. Although the top wall portion 22 may be provided with the communication portion 25 in communication between the power source accommodating portion 200 and the board accommodating portion 210, the area of the communication portion 25 perpendicular to the insertion direction of the power source unit 111 is smaller than the area of the power source unit 111 perpendicular to the insertion direction of the power source unit 111. This prevents the power source unit 111 from entering the board accommodating portion 210 via the communication portions 25 and contacting elements arranged on the main body side board unit 90.

As an example, the main body side board unit 90 is mounted with a plurality of elements and electrical connections of the flexible cable 250 on a first surface 91 of the board, the first surface 91 being arranged in a direction perpendicular to the insertion direction of the power source unit 111. Furthermore, by arranging the board in a position that does not overlap with the position of the communication portion 25 from the direction of insertion of the power source unit 111, the mounting portions (in other words, the electrical connections) of the elements mounted on the board are arranged so as not to be exposed to the power source accommodating portion 200. In other words, a portion of the regulator 29 is arranged between at least the power source accommodating portion 200 and the mounting portion of the elements from the direction of insertion of the power source unit 111. In particular, preferably the mounting portion of the mounted element controlling the supply of power to the heating unit 121 (for example, an MCU 1161, described below) is arranged not to be exposed to the power source accommodating portion 200. Safety can be increased because the power source unit 111 is prevented from being in contact with the control element controlling the supply of power to the heating unit 121. Furthermore, preferably not only the mounting portion of the element mounted on the board, but the entire element is arranged so that it is not exposed to the power source accommodating portion 200. In this case, when attempting to receive the power source unit 111, the main body side board unit 90 is not exposed to the user and the positive terminal connection portion 20a, the negative terminal connection portion 20b, and the temperature terminal connection portion 20c are exposed.

In the example shown in fig. 4, when the bottom wall portion 21 is opened with the power source unit 111 accommodated in the power source accommodating portion 200, the power source accommodating portion 200 is in communication with the outside of the case 20, allowing the power source unit 111 to be removed from the power source accommodating portion 200.

### 3-2. Second Example of an Insertion and Removal Aspect of the Power Source Unit

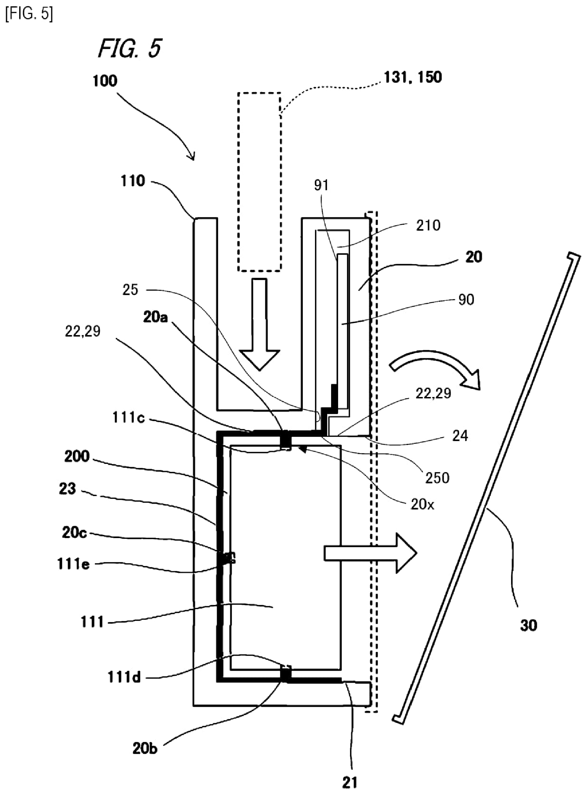

Fig. 5 is a diagram showing a second example of an insertion/removal aspect of the power source unit 111. Note that, in this section, the focus is on the areas that differ from those described in fig. 4, and the areas that are common to those described in fig. 4 will be omitted or simplified as appropriate.

In the example shown in fig. 5, when the previously described panel 30 is removed from the case 20, the power source accommodating portion 200 is in communication with the outside of the case 20, allowing the power source unit 111 to be inserted into the power source accommodating portion 200 from the transverse direction of the case 20. In other words, the opening 24 is provided on a side surface of the case 20 and the opening 24 is configured to be opened and closed with the panel 30.

As the opening 24 is provided in the side surface of the case 20, the board accommodating portion 210 is not located in the insertion direction of the power supply unit 111 inserted through the opening 24.

In the example shown in fig. 5, the positive terminal 111c is provided on the upper surface of the power source unit 111, the negative terminal 111d on the lower surface of the power source unit 111, and the temperature terminal 111e on the side surface of the power source unit 111. For this reason, a positive electrode terminal connection portion 20b is provided to the top wall portion 22 of the power source accommodating portion 200 corresponding to the positive electrode terminal 111c, a negative terminal connection portion 20b is provided to the bottom wall portion 21 of the power source accommodating portion 200 corresponding to the negative terminal 111d, and a temperature terminal connection portion 20c is provided to the side wall portion 23 of the power source accommodating portion 200 corresponding to the temperature terminal 111e. Note that the positive terminal 111c, the negative terminal 111d, and the temperature terminal 111e may be arranged aggregated in one place on the power source unit 110, as shown in fig. 4, and the positive terminal connection portion 20a, the negative terminal connection portion 20b, and the temperature terminal connection portion 20c may also be aggregated in one place on the case 20 to correspond to this.

Since the board accommodating portion 210 is not located in the insertion direction of the power supply unit 111 inserted from the opening 24, the power source unit 111 does not typically enter the board accommodating portion 210. However, when the power source unit 111 is inserted at an angle from the opening 24, a portion of the power supply unit 111 may enter the board accommodating portion 210, but the top wall portion 22 arranged between the power source accommodating portion 200 and the board accommodating portion 210 as viewed from the power source accommodating portion 200 restricts contact by the power source unit 111 with the electrical connection between the elements arranged on the main body side board unit 90 and the main body side board unit 90. In the present example, the top wall portion 22 is an example of the regulator 29 of the present disclosure.

In the example shown in fig. 5, when the panel 30 is removed from the case 20 with the power source unit 111 accommodated in the power source accommodating portion 200, the power source accommodating portion 200 is in communication with the outside of the case 20, and the power source unit 111 can be removed from the power source accommodating portion 200. Note that the panel 30 may be opened and closed about a hinge portion as described in fig. 4.

### 3-3. Third Example of an Insertion and Removal Aspect of the Power Supply Unit

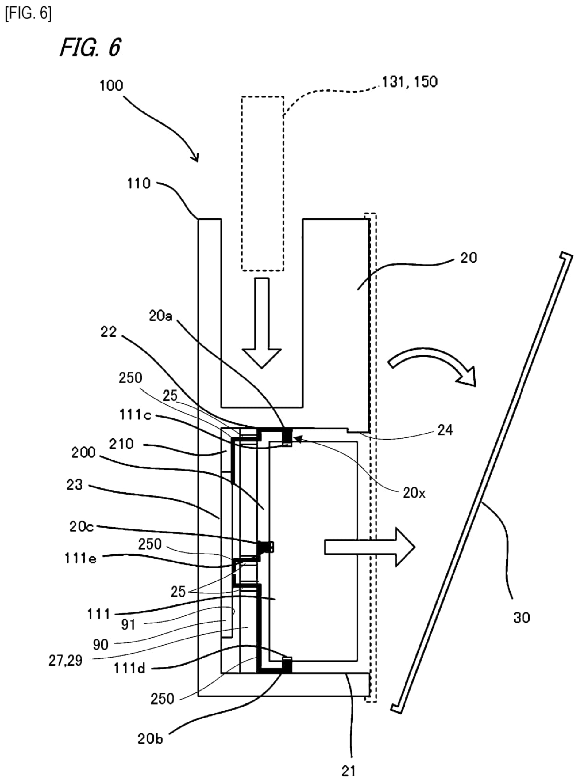

Fig. 6 is a diagram showing a third example of an insertion/removal aspect of the power source unit 111. Note that the focus here is on the areas that differ from those described in fig. 4 or 5, and the areas that are common to those described in fig. 4 or 5 will be omitted or simplified as appropriate.

In the example shown in fig. 6, similar to the example shown in fig. 5, the opening 24 is provided on a side surface of the case 20, and the opening 24 is configured so that it can be opened and closed with the panel 30. On the other hand, unlike the example shown in fig. 5, in the insertion direction of the power source unit 111 inserted from the opening 24, the power supply accommodating portion 200 and the board accommodating portion 210 are provided in this order from the opening 24. A dividing wall portion 27 is arranged between the power supply accommodating portion 200 and the board accommodating portion 210 in the insertion direction of the power source unit 111.

In the example shown in fig. 6, the positive terminal 111c is provided on the upper surface of the power source unit 111, the negative terminal 111d on the lower surface of the power source unit 111, and the temperature terminal 111e on the side surface of the power source unit 111. For this reason, a positive electrode terminal connection portion 20b is provided to the top wall portion 22 of the power source accommodating portion 200 corresponding to the positive electrode terminal 111c, a negative terminal connection portion 20b is provided to the bottom wall portion 21 of the power source accommodating portion 200 corresponding to the negative terminal 111d, and a temperature terminal connection portion 20c is provided to the dividing wall portion 27 of the power source accommodating portion 200 corresponding to the temperature terminal 111e. Note that the positive terminal 111c, the negative terminal 111d, and the temperature terminal 111e may be arranged aggregated in one place on the power source unit 110, as shown in fig. 4, and the positive terminal connection portion 20a, the negative terminal connection portion 20b, and the temperature terminal connection portion 20c may also be aggregated in one place on the case 20 to correspond to this.

The dividing wall portion 27 may be provided integrally with the case 20, or provided separately from the case 20 and attached to the case 20, but when the power source unit 111 is replaced, it is arranged fixed to the case 20. When the power source unit 111 is replaced, the power source unit 111 is prevented from entering the board accommodating portion 210 and coming into contact with elements arranged on the main body side board unit 90. In the present example, the dividing wall portion 27 is an example of the regulator 29 of the present disclosure.

The communication portion 25 is formed in the dividing wall portion 27 in communication between the power supply accommodating portion 200 and the board accommodating portion 210, and the flexible cable 250 extends from positive terminal connection portion 20a, the negative terminal connection portion 20b, and the temperature terminal connection portion 20c through the communication portion 25 and is connected to the main body side board unit 90. In addition to the through-hole through which the flexible cable 250 is inserted, the dividing wall portion 27 may be provided with communication portions 25 such as through-holes, gaps, cut-outs, or the like. However, the area of the communication portions 25 orthogonal to the insertion direction of the power source unit 111 is smaller than the area of the power source unit 111 orthogonal to the insertion direction of the power source unit 111. This prevents the power source unit 111 from entering the board accommodating portion 210 via the communication portions 25 and contacting elements arranged on the main body side board unit 90.

Preferably, the dividing wall portion 27 covers the electrical connections of elements arranged on the first face 90a of the main body side board unit 90, viewed at least from the opening 24, more preferably covers the elements arranged on the main body side board unit 90, and even more preferably covers the whole body side board unit 90. By covering at least the connections between the board and elements arranged on the main body side board unit 90, the generation of short circuits is prevented when the power source unit 111 is replaced.

In the example shown in fig. 6, when the panel 30 is removed from the case 20 with the power source unit 111 accommodated in the power source accommodating portion 200, the power source accommodating portion 200 is in communication with the outside of the case 20, and the power source unit 111 can be removed from the power source accommodating portion 200. Note that the panel 30 may be opened and closed about a hinge portion as described in fig. 4.

### 3-4. Fourth Example of an Insertion and Removal Aspect of the Power Source Unit

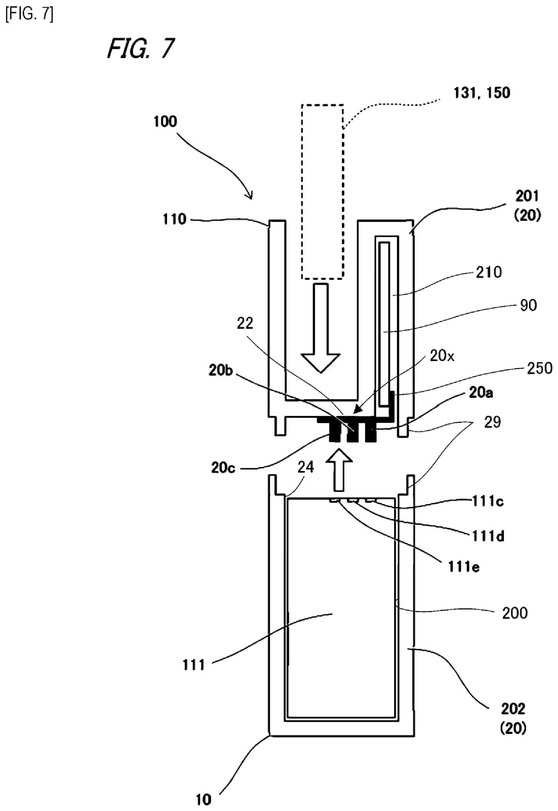

Fig. 7 is a diagram showing a fourth example of an insertion/removal aspect of the power source unit 111. Note that, in this section, the focus is on the areas that differ from those described in fig. 4-6, and the areas that are common to those described in fig. 4-6 will be omitted or simplified as appropriate.

In the example shown in fig. 7, the case 20 comprises a top case 201 constituting the outer packaging of the upper region in the inhalation device 100 and a bottom case 202 constituting the outer packaging of the lower region in the inhalation device 100.

The bottom case 202 is provided with an opening 24 in the upper surface and the power source unit 111 is received in the internal power source accommodating portion 200. In this way, in the example shown in fig. 7, the power source unit 111 and the bottom case 202 are a modularized power supply unit 10.

The power supply unit 10 is attached to the top case 201 from below. By way of example, both the top case 201 and the bottom case 202 have a substantially cylindrical shape extending vertically, a threaded groove is machined into the outer peripheral surface of one among the lower end of the top case 201 and the upper end of the bottom case 202, and an inner peripheral surface of the other among the lower end of the top case 201 and the upper end of the bottom case 202, and the lower end of the top case 201 and upper end of the bottom case 202 are screwed together, thereby attaching the power supply unit 10 to the top case 201.

As another example, a magnet may be provided at one among the lower end of the top case 201 and the upper end of the bottom case 202, the other among the lower end of the top case 201 and the upper end of the bottom case 202 may be formed by a ferromagnetic material, and the lower end of the top case 201 and the upper end of the bottom case 202 may be attracted by the magnetic force of the magnet ,thereby attaching the power supply unit 10 to the top case 201. As yet another example, the bottom case 202 may have a locking portion such as a claw, and the power supply unit 10 may be attached to the top case 201 by the locking portion locking the top case 201.

With the power supply unit 10 attached to the top case 201, the power source unit 111 is held in a state in which the positive terminal 111c is electrically connected to the positive terminal connection portion 20A, the negative terminal 111d is electrically connected to the negative terminal connection portion 20b, and the temperature terminal 111e is electrically connected to the temperature terminal connection portion 20c.

When the lower end of the top case 201 and the upper end of the bottom case 202 are screwed together, the power source unit 111 modularized in the bottom case 202 is restricted from entering the board accommodating portion 210 of the top case 201. In this case, the assembly structure of the top case 201 and the bottom case 202 restricts the power source unit 111 from entering the board accommodating portion 210 and contacting elements arranged on the main body side board unit 90, and thus the assembly structure of the top case 201 and the bottom case 202 is one example of the regulator 29 of the present disclosure. Meanwhile, if movement of the power source unit 111 is permitted even when the lower end of the top case 201 and the upper end of the bottom case 202 screw together, the top wall portion 22 is an example of the regulator 29 of the present disclosure.

Although the top wall portion 22 may be provided with the communication portion 25 in communication between the power source accommodating portion 200 and the board accommodating portion 210, the area of the communication portion 25 perpendicular to the insertion direction of the power source unit 111 is smaller than the area of the power source unit 111 perpendicular to the insertion direction of the power source unit 111. This prevents the power source unit 111 from entering the board accommodating portion 210 via the communication portions 25 and contacting elements arranged on the main body side board unit 90.

In the example shown in fig. 7, when screwing of the lower end of the top case 201 and the upper end of the bottom case 202 is released with the power source unit 111 accommodated in the power supply unit 10, the power source accommodating portion 200 is in communication with the outside of the case 20, allowing the power source unit 111 to be removed from the power source accommodating portion 200.

### 4. Configuration Example of the Power Source Unit and Control Unit

### 4-1. Configuration Example of the Power Source Unit

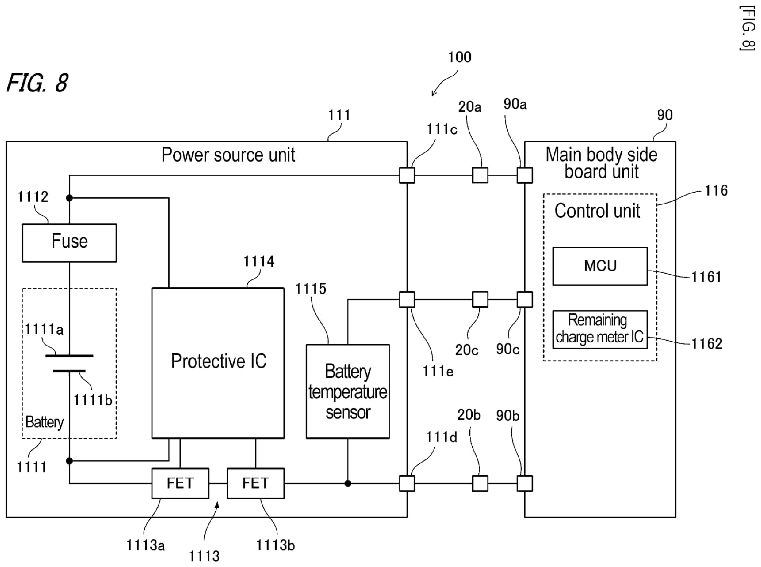

Fig. 8 is a diagram showing an example of the configuration of the power source unit 111 and the control unit 116. As shown in fig. 8, the power source unit 111 comprises, for example, a battery 1111, a fuse 1112, a switch circuit 1113, a protective IC 1114, a battery thermistor 1115, a positive terminal 111c, a negative terminal 111d, and a temperature terminal 111e. More specifically, the battery 1111, the fuse 1112, the switch circuit 1113, the protective IC 1114, and the battery thermistor 1115 are packaged in the power source unit 111, and the positive terminal 111c, the negative terminal 111d, and the temperature terminal 111e are exposed to the outside. Details of each of these elements are described below. To be packaged means to be fixed together, put together in one package, etc. It should be noted that, when packaging, each element to be enclosed is preferably covered with an insulator. Here, the battery 1111, the fuse 1112, the switch circuit 1113, the protective IC 1114, and the battery thermistor 1115 are packaged so as not to be exposed to the outside and covered with an insulator.

When the power source unit 111 is properly mounted in the case 20 of the inhalation device 100, the positive terminal 111c of the power source unit 111 is electrically connected to the positive terminal 90a of the main body side board unit 90 via the positive terminal connection portion 20a of the case 20, and the negative terminal 111d of the power source unit 111 is electrically connected to the negative terminal 90b of the main body side board unit 90 via the negative terminal connection portion 20b of the case 20. Furthermore, the temperature terminal 111e of the power source unit 111 is electrically connected to the temperature terminal 90c of the main body side board unit 90 via the temperature terminal connection portion 20c of the case 20.

Note that the power source unit 111 only needs to be packaged with the battery 1111 and a protective circuit including the protective IC 1114 and the switch circuit 1113, and the fuse 1112 and battery thermistor 1115 need not necessarily be packaged. In this way, the power source unit 111 is packaged with the battery 1111 and the protective circuit, and the packaged power source unit 111 is configured to be insertable in and removable from the case 20 of the inhalation device 100. Thus, it is possible for the user to replace a degraded or faulty power source unit 111. Also, since the protective circuit is provided to the power source unit 111, the circuit can be interrupted upstream of the connection portion 20x when an overvoltage and/or overcurrent is detected, improving safety.

The battery thermistor 1115 is also packaged in the power source unit 111 to allow the battery thermistor 1115 to be positioned in the vicinity of the battery 1111. If the battery thermistor 1115 is not packaged but is arranged in the case 20, it is desirable that the battery thermistor 1115 is also not exposed to the user. In that case, arranging the battery thermistor 1115 via the regulator 29 from the insertion direction of the power source unit 111 reduces the accuracy of measuring the temperature of the battery 1111. Thus, the battery thermistor 1115 also being packaged as the power source unit 111 allows for a more accurate detection of the temperature of the battery 1111, further improving safety.

The fuse 1112 is also packaged in the power source unit 111, thereby preventing overcurrent of the battery 1111 in the package.

### 4-2. Configuration Example of the Control Unit

The control unit 116 comprises an MCU 1161, for example. Furthermore, the control unit 116 may comprise the MCU 1161 and a remaining charge meter IC 1162 as a remaining charge meter, and the MCU 1161 and the remaining charge meter IC 1162 may be provided in a communicative state with each other. Each function of the control unit 116 in this embodiment is achieved by the cooperation of a plurality of ICs of the main body side board unit 90, such as the MCU 1161 and the remaining charge meter IC 1162, for example. Furthermore, some functions of the control unit 116 may be realized only by the MCU 1161, for example. The MCU 1161 may consist of a plurality of MCUs. Moreover, some functions of the control unit 116 may not be provided on the main body side board unit 90.

The MCU 1161 is an IC constituting the aforementioned control unit 116. More specifically, the MCU 1161 is configured mainly by a processor that performs various operations, and the processor executes pre-stored programs to control the operation of specific controlled objects provided in the circuits of the inhalation device 100. The MCU 1161 controls charging and/or discharging of the power source unit 111 mounted on the inhalation device 100 based on information obtained from the remaining charge meter IC1162, etc., for example, and controls the previously described notification unit 113 (e.g., a light emitting device, display device, or vibrating device) to make a predetermined notification.

The remaining charge meter IC 1162 is an IC that derives, as battery information, the remaining charge (also referred to hereinafter as the "remaining battery charge") of the power source unit 111 mounted on the inhalation device 100, i.e., the remaining charge of the power source unit 111 connected to the connection portion 20x. Here, the remaining battery charge can, for example, be the SOC (state of charge) of the power source unit 111.

The remaining charge meter IC 11162 can acquire, as the battery information, a cycle count value o the power source unit 111, information indicating the SOH (state of health) of the power source unit 111, the battery temperature, which is the temperature of the power source unit 111, the power source voltage, which is the output voltage of the power source unit 111, the current value of the current output from the power source unit 111, etc., for example. The remaining charge meter IC 1162 is configured to be capable of causing the battery information to be stored in the memory 1163 serving as the memory unit that can store the battery information. The memory 1163 may be a memory that is configured by a non-volatile storage medium such as a flash memory, for example, and that is provided inside the remaining charge meter IC 1162. Details of the battery information obtained by the remaining charge meter IC 1162 will be described below.

### 5. Example of Control by the MCU

As previously mentioned, in the inhalation device 100, the power source unit 111 is insertable in and removable from the inhalation device 100, thereby making it possible for the user to replace the power source unit 111 as appropriate. Therefore, for example, if repeated charging and discharging causes the power source unit 111 to degrade and its performance degrades, the user can replace it with a new power source unit 111 to enable full use of the inhalation device 100 again.

On the other hand, if the user can replace the power source unit 111, the appropriate power source unit 111 may not necessarily be properly mounted. For example, it is also conceivable that there is a problem with the mounted power source unit 111, such as the newly mounted power source unit 111 not being compatible with the inhalation device 100 in terms of hardware. Furthermore, it is also conceivable that the power source unit 111 may not be properly mounted (in other words, the connection state between the power source unit 111 and the connection portion 20x would not be normal) such as due to the power source unit 111 being connected backwards to the connection portion 20x by mistake of the user (more specifically, the positive terminal 111c being connected to the negative terminal connection portion 20b, and the negative terminal 111d being connected to the positive terminal connection portion 20a), or foreign matter such as dust adhering to the connection portion 20x during replacement work of the power source unit 111.

In this way, if there is some type of fault such as a problem with the mounted power source unit 111 or the power source unit 111 not being properly mounted, and the inhalation device 1000 is operated normally without taking this fault into consideration, it can lead to malfunction of the inhalation device 1000, and is not preferable from the viewpoint of ensuring the safety of the inhalation device 100 and/or user convenience.

Therefore, when the power source unit 111 is connected to the connection portion 20x, for example, the MCU 1161 (i.e., the control unit 116) acquires information pertaining to the connected power source unit 111 (hereinafter, also referred to as the "connected power source information"), and executes a predetermined operation confirmation on the basis of the acquired connected power source information. This allows the inhalation device 100 to detect whether the appropriate power source unit 111 is properly mounted or not.

Thus, it is possible to inhibit operating the inhalation device 100 as normal despite that there is some type of fault such as a problem with the power source unit 111 connected to the connection portion 20x or the connection state between the power source unit 111 and the connection portion 20x is not normal, which makes it possible to improve safety of the inhalation device 1000 and/or user convenience.

The MCU 1161 can detect that the power source unit 111 is connected to the connection portion 20x based on a potential difference occurring between the positive terminal connection portion 20a and the negative terminal connection portion 20b, for example. This is because, when the power source unit 111 is mounted, the potential difference between the positive terminal connection portion 20a and the negative terminal connection portion 20b (more specifically, a potential difference obtained by subtracting the lower potential from the higher potential among the positive terminal connection portion 20a and the negative terminal connection portion 20b) is greater than 0[V].

The MCU 1161 acquires the connected power source information in accordance with the power source unit 111 being connected to the connection portion 20x, and executes an operation confirmation on the basis of the acquired connected power source information, for example.

### (Example of Connected Power Source Information acquired by MCU)

The MCU 1161 acquires information indicating each of the remaining battery charge, power supply voltage, SOH, connection state between the power source unit 111 and the connection portion 20x, the presence or absence of a short circuit in the connection portion 20x, and the battery temperature, for example.

The MCU 1161 can obtain the information indicating each of the remaining battery charge, power supply voltage, SOH, and battery temperature from the remaining charge meter IC 1162.

Furthermore, the information indicating the connection state between the power source unit 111 and the connection portion 20x can be information indicating whether the connection state between the power source unit 111 and the connection portion 20x is normal or not. For example, if the potential difference between the positive terminal connection portion 20a and the negative terminal connection portion 20b is within a predetermined range greater than 0 [V], and the potential of the positive terminal connection portion 20a is higher than the potential of the negative terminal connection portion 20b, the MCU 1161 acquires information indicating that the connection state between the power source unit 111 and the connection portion 20x is normal. On the other hand, if the potential difference between the positive terminal connection portion 20a and the negative terminal connection portion 20b is outside the predetermined range, or the potential of the positive terminal connection portion 20a is lower than the potential of the negative terminal connection portion 20b, the MCU 1161 may acquires information indicating that the connection state between the power source unit 111 and the connection portion 20x is not normal. Information indicating the presence or absence of a short circuit at the connection portion 20x can also be obtained in the same way, based on the potential difference between the positive terminal connection portion 20a and the negative terminal connection portion 20b, for example.

### (Example of Operation Confirmation)

In the operation confirmation, the MCU 1161 performs a battery remaining charge check, power supply voltage check, SOH check, connection state check, short circuit check, battery temperature check, etc., for example.

Here, the battery remaining charge check is the process of checking whether there is a certain amount of power remaining in the power source unit 111 connected to the connection portion 20x. Specifically, in the remaining battery charge check, the MCU 1161 detects a fault such as insufficient remaining battery charge in the power source unit 111, based on the information indicative of the remaining battery charge.

By performing an operation confirmation including such a battery remaining charge check and controlling the operation of the inhalation device 100 based on the result, it is possible to inhibit inconveniences such as the power of the power source unit 111 running out due to operating the inhalation device 100 normally despite that the remaining battery charge of the power source unit 111 connected to the connection portion 20x is insufficient, for example.

Furthermore, here, the power supply voltage check is the process of checking whether the power supply voltage, which is the output voltage of the power source unit 111 connected to the connection portion 20x, is within an appropriate range of the inhalation device 100 in terms of hardware. Specifically, in the power supply voltage check, the MCU 1161 detects degradation of the power source unit 111 connected to the connection portion 20x, based on the information indicative of the power supply voltage, or a fault such as an incompatible connection of the power source unit 111.

By performing an operation confirmation including such a power supply voltage check and controlling the operation of the inhalation device 100 based on the result, it is possible to inhibit inconveniences such as operating the inhalation device 100 normally despite that the power source unit 111 connected to the connection portion 20x is not appropriate for the inhalation device 100, for example.

Furthermore, here, the SOH check is the process of checking whether the power source unit 111 connected to the connection portion 20x is healthy (in other words, whether degradation is low). Specifically, in the SOH check, the MCU 1161 detects a fault such as degradation of the power source unit 111 connected to the connection portion 20x, based on the information indicative of the SOH.

By performing an operation confirmation including such an SOH check and controlling the operation of the inhalation device 100 based on the result, it is possible to inhibit inconveniences such as operating the inhalation device 100 normally despite that the power source unit 111 connected to the connection portion 20x is degraded (in other words, degraded performance), for example.

Furthermore, here, the connection state check is a process of checking whether the connection state between the power source unit 111 and the connection portion 20x is normal. Specifically, in the connection state check, the MCU 1161 detects a fault such as backwards connection of the power source unit 111, or foreign matter such as dust adhering to the connection portion 20x, based on the information indicative of the connection state. Note that backwards connection of the power source unit 111 is, for example, a state in which the negative terminal 111d of the power source unit 111 is connected to the positive terminal connection portion 20a of the case 20 and the positive terminal 111c of the power source unit 111 is connected to the negative terminal 111d of the case 20.

By performing an operation confirmation including such a connection state check and controlling the operation of the inhalation device 100 based on the result, it is possible to inhibit inconveniences such as operating the inhalation device 100 normally despite that the power source unit 111 is not properly connected, for example.

Furthermore, here, a short circuit check is the process of checking if a short circuit has occurred at the connection portion 20x connected to the power source unit 111. Specifically, in the short circuit check, the MCU 1161 detects a fault such as a short circuit occurring, based on the information indicative of the presence or absence of a short circuit. Note that a short circuit at the connection portion 20x may occur due to foreign matter such as dust adhering to the connection portion 20x, for example.

By performing an operation confirmation including such a short circuit check and controlling the operation of the inhalation device 100 based on the result, it is possible to inhibit inconveniences such as operating the inhalation device 100 normally despite a short circuit occurring at the connection portion 20x connected to the power source unit 111, for example.

Furthermore, here, the battery temperature check is the process of checking whether the temperature state of the power source unit 111 connected to the connection portion 20x is normal.

Specifically, in the battery temperature check, the MCU 1161 detects a fault such as a temperature abnormality of the power source unit 111 connected to the connection portion 20x, based on the information indicative of the battery temperature.

By performing an operation confirmation including such a battery temperature check and controlling the operation of the inhalation device 100 based on the result, it is possible to inhibit inconveniences such as operating the inhalation device 100 normally despite that the power source unit 111 connected to the connection portion 20x is not appropriate for the inhalation device 2000, or the power source unit 111 is not appropriately connected.

Furthermore, if any fault is detected by the above-described operation check, the MCU 1161 prohibits heating by the heating unit 121, for example. That is, in this case, the MCU 1161 ensures that heating by the heating unit 121 is not performed even if there is a heating request from the user. This makes it possible to inhibit the occurrence of inconveniences such as heating by the heating unit 121 being performed despite that there is a problem with the power source unit 111 connected to the connection portion 20x or the connection state between the power source unit 111 and the connection portion 20x is not normal.

Furthermore, if the fault detected by the operation confirmation is anything other than an insufficient remaining battery charge, the MCU 1161 also prohibits charging of the power source unit 111, for example. That is, in this case, the MCU 1161 prevents charging of the power source unit 111 even if the inhalation device 100 is connected to an external power source. This makes it possible to inhibit the occurrence of inconveniences such as charging of the power source unit 111 being performed despite that there is a problem with the power source unit 111 connected to the connection portion 20x or the connection state between the power source unit 111 and the connection portion 20x is not normal.

### 6. Circuit Configuration of Inhalation Device

A circuit configuration of the inhalation device 100 will next be described. It should be noted that, in order to simplify the explanation, the explanation here will focus on the parts of the circuit of the inhalation device 100 that are related to aerosol generation, and illustrations and explanations for other parts will be omitted or simplified as appropriate. It should also be noted that only the main electronic components are shown and described here. That is, the inhalation device 100 may be configured with the addition of other electronic components, etc. as appropriate in addition to the electronic components described below.

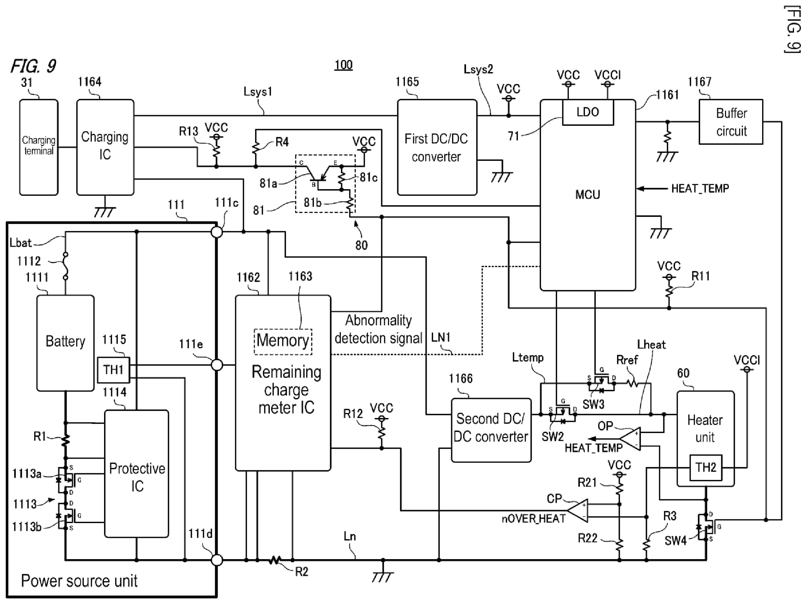

As described in fig. 8, for example, the positive terminal 111c of the power source unit 111 is connected to the positive terminal 90A of the main body side board unit 90 via the positive terminal connection portion 20a of the case 20, the negative terminal 111d of the power source unit 111 is connected to the negative terminal 90b of the main body side board unit 90 via the negative terminal connection portion 20b of the case 20, and the temperature terminal 111e of the case 20 is connected to the temperature terminal 90c of the main body side board unit 90 via the temperature terminal connection portion 20c of the case 20, but the explanation of fig. 9-13 shows only the terminals 111c, 111d, and 111e of the power source unit 111 for simplicity.

### 6-1. First Example of Circuit Configuration of Inhalation Device

Fig. 9 is a diagram showing a first example of the circuit configuration of the inhalation device 100. In fig. 9, the power line indicated by the reference sign Ln is a power line connected to ground having a reference potential of the circuit of the inhalation device 100. Hereinafter, the power line Ln will also be referred to as the "ground line Ln" and the potential of the ground connected to the ground line Ln will be set to 0 [V]. Furthermore, unless explicitly stated otherwise, voltages hereinafter are assumed to mean the potential difference from the ground potential (i.e., 0 [V]).

As shown in fig. 9, the inhalation device 100 comprises a battery 1111, a protective IC 1114, a remaining charge meter IC 1162, a charging IC 1164, a first DC/DC converter 1165, a second DC/DC converter 1166, a heater unit 60, and an MCU 1161. Here, the heater unit 60 is an example of the heating unit 121 and the MCU 1161 is an example of the control unit 116.

The protective IC 1114, the remaining charge meter IC 1162, the charging IC 1164, the first DC/DC converter 1165, the second DC/DC converter 1166, and the MCU 1161 are ICs (integrated circuits) that integrate various elements such as transistors and resistors. Each of these ICs has terminals that electrically connect the interior and the exterior of the IC. In the following description, when it is stated that each IC is connected to other electronic components, unless otherwise specified, this means that prescribed terminals, excluding a ground terminal, among the terminals provided on each IC are electrically connected to the other electronic components, unless otherwise indicated. Also, the ground terminal of the terminals provided on each IC is connected to ground via the ground line Ln or the like.

### (Power source unit)

The battery 1111 can be a rechargeable battery such as a lithium ion secondary battery, and is configured to be capable of outputting, for example, approximately 4 [V] as a terminal-to-terminal voltage (power supply voltage) between the positive terminal and the negative terminal. The positive terminal of the battery 1111 is connected to a power source voltage line Lbat, which is a power line different from the ground line Ln. The negative terminal of the battery 1111 is connected to the ground line Ln.

### (Fuse)

The fuse 1112 is a protective element arranged at the power supply voltage line Lbat and melts when a current of a predetermined value or higher flows, to break the electrical connection between the battery 1111 and the electronic components. By providing such a fuse 1112, the input of overcurrent to the protective IC 1114 and output from the positive terminal 111c is prevented, even if overcurrent that is current of a predetermined value or higher is output from the battery 1111.

### (Battery thermistor)

A battery thermistor 1115 (also denoted as TH1 in the drawings) configured to be capable of outputting a parameter relating to the battery temperature is provided in the vicinity of the battery 1111. As an example, the battery thermistor 1115 is provided so as to come into contact with a predetermined location of the rechargeable battery constituting the battery 1111.

The battery thermistor 1115 may, for example, be an NTC thermistor comprising a resistor having an NTC characteristic, or a PTC thermistor comprising a resistor having a PTC characteristic. In this case, the battery thermistor 1115 outputs the electrical resistance value of its own resistor as the parameter relating to the battery temperature. One end of the battery thermistor 1115 is connected to the remaining charge meter IC 1162. The other end of the battery thermistor 1115 is connected to the ground line Ln.

### (Protective IC)

The protective IC 1114 is an IC that functions as a controller configured to accept input of a parameter or signal representing a state of the inhalation device 100, and to perform control to protect the battery 1111 from overcurrent, etc., on the basis of the parameter or signal.

Parameters representing the state of the inhalation device 100 that can be cited include, for example, the current value of a current flowing at a predetermined point in the circuit of the inhalation device 100, the voltage value at a predetermined point in the circuit of the inhalation device 100, the amount of voltage drop due to a predetermined electronic component provided in the circuit of the inhalation device 100, or the temperature of a predetermined component provided in the inhalation device 100.

Furthermore, the signal representing the state of the inhalation device 100 can, for example, be a signal indicating that the inhalation device 100 has entered a predetermined state. More specifically, signals representing the state of the inhalation device 100 that can be cited include, for example, a signal indicating that the temperature of a predetermined component provided in the inhalation device 100 has exceeded a threshold, a signal indicating that the current value of a current flowing through a predetermined point in the circuit of the inhalation device 100 has exceeded a threshold, or a signal indicating that the voltage value at a predetermined point in the circuit of the inhalation device 100 has exceeded a threshold value.

In the present example, the protective IC 1114 is connected to both ends of a resistor R1 having a predetermined electrical resistance value, provided in the ground line Ln. As a result, the amount of voltage drop due to the resistor R1 is input to the protective IC 1114. The protective IC 1114 then acquires the current value of the current flowing through the ground line Ln (i.e., the current output from the battery 1111) on the basis of the amount of voltage drop due to the resistor R1, and can control a switch circuit 1113 provided in the ground line Ln on the basis of this current value.

The switch circuit 1113 is configured by a switch 1113a and a switch 1113b that are connected in series, for example. In the present example, the switch 1113a and the switch 1113b are N-channel MOSFETs (metal-oxide-semiconductor field effect transistors). Furthermore, the source terminal of the switch 1113a is connected to the negative terminal of the battery 1111 via the resistor R1, the drain terminal of the switch 1113a is connected to the drain terminal of the switch 1113b, and the gate terminal of the switch 1113a is connected to the protective IC 1114. In addition, the source terminal of the switch 1113b is connected to ground via the ground line Ln and the gate terminal of the switch 1113b is connected to the protective IC 1114.

Furthermore, the switch 1113a and the switch 1113b each have a diode that allows current to flow only from the source terminal side to the drain terminal side. These diodes may, for example, be the respective body diodes of the switch 1113a and the switch 1113b, but are not limited thereto, and may equally be diodes provided separately from the switch 1113a and the switch 1113b.

According to the configuration of the present example, the protective IC 1114 can turn the switch 1113a on (in other words, the conducting state) or off (in other words, the cut-off state) by controlling the gate voltage of the switch 1113a. Similarly, the protective IC 1114 can turn the switch 1113b on or off by controlling the gate voltage of the switch 1113b.

For example, when the battery 1111 is being charged, if the current value of the current flowing through the ground line Ln is greater than a predetermined threshold, the protective IC 1114 turns off the switch 1113b. As a result, the protective IC 1114 can stop the battery 1111 from being charged. It is therefore possible to protect the battery 1111 from an overcurrent that may occur when the battery 1111 is being charged.

Also, when the battery 1111 is discharging, in other words, when power is being supplied from the battery 1111 to each component, the protective IC 1114 switches off the switch 1113a if the current value of the current flowing through the ground line Ln is greater than a predetermined threshold. As a result, the protective IC 1114 can stop the battery 1111 from discharging. It is therefore possible to protect the battery 1111 from an overcurrent that may occur when the battery 1111 is discharging.

Furthermore, the protective IC 1114 may be connected to the power source voltage line Lbat such that the power source voltage is input to the protective IC 1114, and the protective IC 1114 may control the switch circuit 1113 on the basis of the power supply voltage.

For example, if the power source voltage becomes higher than a predetermined threshold when the battery 1111 is being charged, the protective IC 1114 may turn the switch 1113b off, thereby stopping the battery 1111 from being charged. In this way, it is possible to suppress overcharging of the battery 1111.

Also, if the power source voltage falls below a predetermined threshold when the battery 1111 is discharging, the protective IC 1114 may turn the switch 1113a off, thereby stopping the battery 1111 from discharging. In this way, it is possible to suppress over-discharge of the battery 1111.

It should be noted that, although the resistor R1 and the switch circuit 1113 connected to the protective IC 1114 are provided in the ground line Ln in the example described here, the configuration is not limited thereto. For example, the resistor R1 and the switch circuit 1113 may be provided in the power source voltage line Lbat.

### (Remaining charge meter IC)

In the present example, the remaining charge meter IC 1162 is connected to both ends of a resistor R2 that has a predetermined electrical resistance value and that is provided in the ground line Ln. As a result, the amount of voltage drop due to the resistor R2 is input to the remaining charge meter IC 1162. The remaining charge meter IC 1162 then acquires the current value of the current flowing in the ground line Ln (i.e., the current output from the power source unit 111) on the basis of the voltage drop due to the resistor R2.

Furthermore, the remaining charge meter IC 1162 is connected to the power source voltage line Lbat. As a result, the power source voltage is input to the remaining charge meter IC 1162. In addition, the remaining charge meter IC 1162 is connected to one end of the battery thermistor 1115. As a result, the electrical resistance value of the battery thermistor 1115 (in other words, the amount of voltage drop due to the battery thermistor 1115) is input to the remaining charge meter IC 1162 as a parameter related to the temperature of the power source unit 111. The remaining charge meter IC 1162 then acquires the battery temperature on the basis of the electrical resistance value of the battery thermistor 1115. As an example, the remaining charge meter IC 1162 can acquire the battery temperature from the electrical resistance value of the battery thermistor 1115 using a table or formula defining a relationship between the electrical resistance value of the battery thermistor 1115 and the battery temperature.

The remaining charge meter IC 1162 then acquires the remaining battery charge on the basis of a plurality of parameters, such as the current value of the current flowing through the ground line Ln, the power source voltage, and the battery temperature. As an example, the remaining charge meter IC 1162 can acquire the remaining battery charge from the abovementioned plurality of parameters using a table or formula defining a relationship between the plurality of parameters and the remaining battery charge. By way of another example, the remaining charge meter IC 1162 may also be used to derive the remaining battery charge using a cycle count value and/or SOH described below.

The remaining charge meter IC 1162 may count the cycle count of the power source unit 111 based on the remaining battery charge and obtain the count value. Here, the cycle count is, for example, a count of the number of times the state of charge (SOC) of the power source unit 111 (more specifically, the battery 1111) has been charged for a total of 100 [%] as one cycle, or the number of times the power source unit has been discharged in amount corresponding to 100 [%] SOC, and is also referred to as a "full charge cycle".

Furthermore, the remaining charge meter IC 1162 can obtain the SOH (state of health), which is the degree of health of the power source unit 111, based on the power supply voltage and the cycle count value.

The remaining charge meter IC 1162 is connected to the MCU 1161 by a communication line LN1 for serial communication and is configured to be able to communicate with the MCU 1161. The battery information acquired by the remaining charge meter IC 1162 is, for example, stored in the memory 1163 and transmitted to the MCU 1161 at a predetermined timing. More specifically, the remaining charge meter IC 1162 is configured to be capable of communicating with the MCU 1161, for example by means of an I2C (inter-integrated circuit) or the like, and utilizes this communication to transmit the battery information to the MCU 1161. An example of the timing at which the remaining charge meter IC 1162 transmits the battery information may be the timing at which the remaining charge meter IC 1162 acquires the battery information, but it is not limited to this, and, for example, may be the timing at which the remaining charge meter IC 1162 receives a request from the MCU 1161 to transmit the battery information. Furthermore, communication between the remaining charge meter IC 1162 and the MCU 1161 is not limited to I2C, and any communication method may be employed.

The remaining charge meter IC 1162 acquires the battery information including information indicating the remaining battery charge, and transmits the battery information to the MCU 1161, thereby enabling the MCU 1161 to ascertain the remaining battery charge and perform control based on the remaining battery charge. As an example, the MCU 1161 can notify the user of the remaining battery charge using the notification unit 113. This improves user convenience.

Furthermore, the remaining charge meter IC 1162 may store the abnormality detection information in the memory 1163. More specifically, the remaining charge meter IC 1162 is configured to be capable of detecting predetermined abnormalities of the inhalation device 100 on the basis of parameters such as the current value of the current flowing through the ground line Ln, discussed hereinabove, and the battery temperature, or a signal (nOVER_HEAT signal) input from a comparator CP, discussed hereinafter.

For example, if the battery temperature becomes higher than a predetermined threshold during charging and/or discharging of the power source unit 111, the remaining charge meter IC 1162 detects a "battery temperature abnormality", which is the abnormality that the battery temperature, which should be kept below the threshold, has exceeded the threshold.

Also, if the current value of the current flowing through the ground line Ln becomes greater than a predetermined threshold during charging and/or discharging of the power source unit 111, the remaining charge meter IC 1162 detects a "current value abnormality (in other words an overcurrent)" that the current value, which should be kept below the threshold, has exceeded the threshold value.

Furthermore, when the nOVER_HEAT signal (discussed hereinafter) is input from the comparator CP during charging and/or discharging of the power source unit 111, the remaining charge meter IC 1162 detects a "heater temperature abnormality (in other words, overheating)," which is an abnormality that the temperature (hereinafter also referred to as "heater temperature") of the heater unit 60 (in other words, the heating unit 121), which should be kept below a threshold value, has exceeded the threshold value.

Furthermore, in the present example, when any of the abovementioned abnormalities is detected, the remaining charge meter IC 1162 outputs a low-level voltage signal (hereinafter also referred to as an "abnormality detection signal") from a predetermined terminal. Hereinafter, the terminal of the remaining charge meter IC 1162 from which the abnormality detection signal is output will also be referred to as an "alert terminal."

As shown in fig. 9, the alert terminal from which the abnormality detection signal is output is connected, for example, to the gate terminal of a switch SW4, the MCU 1161, and a switch circuit SW81. Here, the switch SW4 is a low-side switch of the heater unit 60, details of which will be described later. Further, the switch circuit SW81 is a circuit that functions as a switch for stopping the charging operation of the charging IC 1164, discussed hereinafter. Moreover, in the present example, an open-drain system is employed for the alert terminal, and a signal line connecting the alert terminal and the switch SW4, etc., is supplied with a first system voltage Vcc, discussed hereinafter, via a resistor R13 that functions as a pull-up resistor.

According to the configuration of the present example, the alert terminal of the remaining charge meter IC 1162 is connected to the switch SW4, the MCU 1161 and the switch circuit SW81, so that when the abnormality detection signal is output from the remaining charge meter IC 1162, a signal based on the abnormality detection signal can be input to the switch SW4, the MCU 1161, and the switch circuit SW81. At this time, the abnormality detection signal output from the remaining charge meter IC 1162 may be input directly to the switch SW4, the MCU 1161, and the switch circuit SW81, or signals that have been corrected (in other words, adjusted) to have a voltage value and a current value that take into account the hardware characteristics of the switch SW4, the MCU 1161, and the switch circuit SW81 may respectively be input.

### (Charging IC)

The charging IC 1164 is an IC that is provided between a power receiving unit that receives power from an external power source and the power source unit 111, and functions as a controller configured to be capable of charging the power source unit 111 by supplying power received from the external power source by the power receiving unit to the power source unit 111.

In the present example, the power receiving unit is a charging terminal 31 comprising a terminal (e.g., a VBUS terminal) that receives power from the external power source. The charging terminal 31 may, for example, be a receptacle that complies with various standards, such as USB Type-C (registered trademark), microUSB or Lightning (registered trademark). Moreover, the power receiving unit 102 is not limited to such a receptacle, and may be configured, for example, by a power receiving coil or the like configured to be capable of contactlessly receiving power delivered from the external power source.

The charging IC 1164 is connected to each of the charging terminal 31 and the power source voltage line Lbat, and charges the power source unit 111 by supplying the power of the external power source received by the charging terminal 31 to the power source unit 111 via the power source voltage line Lbat.

Furthermore, the charging IC 1164 is connected to the first DC/DC converter 1165 via a first system voltage line Lsys1, which is a power line different from the power source voltage line Lbat and the ground line Ln, and is configured to be capable of supplying the first DC/DC converter 1165 with power from the external power source, received by the charging terminal 31, or power based on the power from the power source unit 111.

When supplying power to the first DC/DC converter 1165, the charging IC 1164 may be configured to supply the power received from the external power source or the power of the power source unit 111 directly to the first DC/DC converter 1165, or to supply power that has been corrected (in other words, adjusted) to have a voltage value and a current value that take into account the hardware characteristics of the first DC/DC converter 40. As an example, the charging IC 1164 supplies the power of the power source unit 111 received via the power source voltage line Lbat to the first DC/DC converter 1165 via the first system voltage line Lsys1.

It should be noted that in the present example, the charging IC 1164 is provided with a charge enable terminal, and is configured to perform the charging operation on the condition that an input to the charge enable terminal is at a low level. In other words, if the input to the charge enable terminal is at a high level, the charging IC 1164 stops the charging operation. Then, when the charging IC 1164 stops the charging operation, charging of the power source unit 111 by means of the power received from the external power supply is stopped. It should be noted that the low-level or high-level signal input to the charge enable terminal is controlled, for example, by the MCU 1161.

### (First DC/DC converter)

The first DC/DC converter 1165 is an IC that is used in combination with a power inductor, not shown, and that functions as a switching regulator for converting an input DC voltage into a prescribed DC voltage.

In the present example, the first DC/DC converter 1165 is connected to each of the first system voltage line Lsys1 and a second system voltage line Lsys2. Here, the second system voltage line Lsys2 is a power line different from the power source voltage line Lbat and the first system voltage line Lsys1 discussed hereinabove, and is a power line used to supply power to the MCU 1161, etc.

Then, the first DC/DC converter 1165 generates power having the first system voltage Vcc from the power supplied via the first system voltage line Lsys1 and outputs the generated power to the second system voltage line Lsys2. As a result, power having the first system voltage Vcc can be supplied to the MCU 1161, etc., via the second system voltage line Lsys2. It should be noted that the system voltage Vcc is the voltage required for operation of the MCU 1161, etc., and can be 3.3 [V], for example.

### (Second DC/DC converter)

The second DC/DC converter 1166 is an IC that is used in combination with a power inductor, not shown, and that functions as a switching regulator for converting an input DC voltage into a prescribed DC voltage.

In the present example, the second DC/DC converter 1166 is connected to each of the power source voltage line Lbat, a heating voltage line Lheat and a temperature measurement line Ltemp. Here, the heating voltage line Lheat and the temperature measurement line Ltemp are power lines different from the power source voltage line Lbat, the first system voltage line Lsys1 and the second system voltage line Lsys2 discussed hereinabove, and are power lines used to supply power to the heater unit 60.

More specifically, the heating voltage line Lheat and the temperature measurement line Ltemp are provided in parallel with the second DC/DC converter 1166 and the heater unit 60. Furthermore, a switch SW2 is provided in the heating voltage line Lheat. Meanwhile, a switch SW3 and a resistor Rref that are connected in series are provided in the temperature measurement line Ltemp. Here, the resistor Rref is a resistor having a predetermined electrical resistance value.

In this example, the switch SW2 and the switch SW3 are P-channel MOSFETs. Then, the source terminal of the switch SW2 is connected to the second DC/DC converter 1166, the drain terminal of the switch SW2 is connected to one end of the heater unit 60, and the gate terminal of the switch SW2 is connected to the MCU 1161. The source terminal of the switch SW3 is connected to the second DC/DC converter 1166, the drain terminal of the switch SW3 is connected to one end of the heater unit 60 via the resistor Rref, and the gate terminal of the switch SW3 is connected to the MCU 1161.

Furthermore, a body diode that allows current to flow only from the drain terminal side to the source terminal side is formed in each of the switch SW2 and switch SW3.

The second DC/DC converter 1166 generates power having the heating voltage Vheat from the power supplied via the power source voltage line Lbat, and outputs the generated power to the heating voltage line Lheat or the temperature measurement line Ltemp. As a result, power having the heating voltage Vheat can be supplied to the heater unit 60 via the heating voltage line Lheat or the temperature measurement line Ltemp. More specifically, when the switch SW2 is on, power is supplied to the heater unit 60 via the heating voltage line Lheat. Meanwhile, when the switch SW3 is on, power is supplied to the heater unit 60 via the temperature measurement line Ltemp. Moreover, the switch SW2 and the switch SW3 are controlled by the MCU 1161 so as not to be turned on at the same time.

Furthermore, the heating voltage Vheat generated by the second DC/DC converter 1166 is a higher voltage than the first system voltage Vcc (for example, 3.3 [V]) to allow the heater unit 60 (that is, the heating unit 121) to generate heat efficiently and rapidly, and can, for example, be 5 [V].

### (Heater unit)

The heater unit 60 is configured mainly of a heat generating resistor (hereinafter also referred to as "resistor Rheat") constituting the heating unit 121. One end of the heater unit 60 (in other words, the resistor Rheat) is connected to the second DC/DC converter 1166 via the heating voltage line Lheat and the temperature measurement line Ltemp. The other end of the heater unit 60 is connected to the ground line Ln via the switch SW4, which functions as a low-side switch for the heater unit 60.

In the present example, the switch SW4 is an N-channel MOSFET. Then, the source terminal of the switch SW4 is connected to ground via the ground line Ln, the drain terminal of the switch SW4 is connected to the other end of the heater unit 60, and the gate terminal of the switch SW4 is connected to the MCU 1161 and the remaining charge meter IC 1162 (more specifically the alert terminal).

Furthermore, a body diode that allows current to flow only from the source terminal side to the drain terminal side is formed in the switch SW4.

### (Heater thermistor)

A heater thermistor TH2 configured to be capable of outputting a parameter relating to the temperature of the heater unit 60 (i.e., the heater temperature) is provided in the vicinity of the heater unit 60. The heater thermistor TH2 may, for example, be an NTC thermistor comprising a resistor having an NTC characteristic. In this case, the heater thermistor TH2 outputs the electrical resistance value of its own resistor as a parameter relating to the heater temperature.

One end of the heater thermistor TH2 is connected, for example, to an LDO 71, discussed hereinafter. The other end of the heater thermistor TH2 is connected, for example, to an inverting input terminal of a comparator CP, discussed hereinafter. It should be noted that in the present example, one end of the heater thermistor TH2 is connected to the LDO 71 so that a second system voltage Vcc1, discussed hereinafter, is supplied to the heater thermistor TH2, but the present invention is not limited to this. For example, if the heater thermistor TH2 is capable of accepting the first system voltage Vcc, in terms of hardware, one end of the heater thermistor TH2 may be connected to the second system voltage line Lsys2 so that the first system voltage Vcc is supplied to the heater thermistor TH2. In such a case, the inhalation device 100 (for example, the MCU 1161) does not need to be provided with the LDO 71 discussed hereinafter.

### (Operational amplifier)

An operational amplifier OP is an electronic component that is provided with a non-inverting input terminal, an inverting input terminal and an output terminal, and that outputs a voltage signal obtained by amplifying the difference between the inputs to the non-inverting input terminal and the inverting input terminal from the output terminal, and may, for example, be realized by an IC that integrates various elements such as transistors and resistors.

In the present example, the non-inverting input terminal of the operational amplifier OP is connected between the resistor Rref of the temperature measurement line Ltemp and the heater unit 60. The inverting input terminal of the operational amplifier OP is connected to ground line Ln. The output terminal of the operational amplifier OP is connected to the MCU 1161.

According to the configuration of the present example, when the switch SW4, which is the low-side switch of the heater unit 60, is turned on and the switch SW3 of the temperature measurement line Ltemp is turned on, the voltage divided by the resistor Rref of the temperature measurement line Ltemp and the resistor Rheat of the heater unit 60 is input to the non-inverting input terminal of the operational amplifier OP. Therefore, at this time, the operational amplifier OP outputs to the MCU 1161 a voltage signal (hereinafter also referred to as the "HEAT_TEMP signal") obtained by amplifying the voltage divided by the resistor Rref and the resistor Rheat. The HEAT_TEMP signal changes depending on the electrical resistance value of the resistor Rheat, that is, the heater temperature. Therefore, the MCU 1161 can acquire the heater temperature on the basis of the HEAT_TEMP signal.

### (Comparator)

The comparator CP is an electronic component that is provided with a non-inverting input terminal, an inverting input terminal, and an output terminal, and that compares a signal input to the non-inverting input terminal and a signal input to the inverting input terminal and switches an output signal from the output terminal between a high level and a low level depending on which signal is larger, and the comparator CP can, for example, be realized by an IC that integrates various elements such as transistors and resistors.

In the present example, a predetermined reference voltage is input to the non-inverting input terminal of the comparator CP. It should be noted that a voltage obtained by dividing the first system voltage Vcc using a resistor R21 and a resistor R22, each having a predetermined electrical resistance value, is here input to the non-inverting input terminal of the comparator CP as the reference voltage, but the present invention it is not limited to this. The reference voltage may be any voltage that is substantially constant (i.e., stable), and for example, a reference voltage generated by any power supply IC, such as an LDO (Low Drop Out), may be input to the non-inverting input terminal of the comparator CP.

Furthermore, the inverting input terminal of the comparator CP is connected between the other end of the heater thermistor TH2 and one end of a resistor R3 having a predetermined electrical resistance value. The other end of the resistor R3 is connected to the ground line Ln. As a result, a voltage divided by the heater thermistor TH2 and the resistor R3 can be input to the inverting input terminal of the comparator CP.

The output terminal of the comparator CP is then connected to the remaining charge meter IC 1162. Moreover, in the present example, an open-drain scheme is employed for the output terminal of the comparator CP, and the first system voltage Vcc is supplied via a resistor R12 that functions as a pull-up resistor to a signal line connecting the output terminal of the comparator CP and the remaining charge meter IC 1162.

According to the configuration of the present example, when the electrical resistance value of the heater thermistor TH2 decreases in association with an increase in the heater temperature, the voltage divided by the heater thermistor TH2 and the resistor R3, that is, the voltage input to the inverting input terminal of the comparator CP, increases. Then, on the condition that the voltage input to the inverting input terminal of the comparator CP has increased and reached the reference voltage, in other words, a threshold, input to the non-inverting input terminal of the comparator CP, the comparator CP outputs a low-level voltage signal (hereinafter also referred to as the "nOVER_HEAT signal") to the remaining charge meter IC 1162.

Further, in the present example, when the heater temperature has increased and reached a predetermined threshold, the voltage input to the inverting input terminal of the comparator CP also reaches the threshold (that is, the reference voltage) and the comparator CP outputs the nOVER_HEAT signal. That is, the nOVER_HEAT signal can be said to be a signal related to the heater temperature (in other words, the temperature of the heating unit 121), and, more specifically, can also be said to be a signal indicating that the heater temperature has exceeded a threshold.

### (MCU)

The MCU 1161 is connected to the gate terminal of the switch SW4, which is the low-side switch of the heater unit 60. This allows the MCU 1161 to control the gate voltage of the switch SW4 to turn the switch SW4 on and off. The MCU 1161 can then enable power to be supplied to the heater unit 60 by turning the switch SW4 on, and conversely, can prevent power from being supplied to the heater unit 60 by turning the switch SW4 off. As shown in fig. 2, a buffer circuit 1167 or the like for correcting an input voltage may be provided between the MCU 1161 and switch SW4, as appropriate.

Furthermore, the MCU 1161 is connected to the gate terminal of the switch SW2 in the heating voltage line Lheat. This allows the MCU 1161 to control the gate voltage of the switch SW2 to turn the switch SW2 on and off.

Furthermore, the MCU 1161 is connected to the gate terminal of the switch SW3 in the temperature measurement line Ltemp. This allows the MCU 1161 to control the gate voltage of the switch SW3 to turn the switch SW3 on and off.

In addition, the MCU 1161 is connected to the charge enable terminal of the charging IC 1164 via a resistor R4 having a predetermined electrical resistance value. Furthermore, the first system voltage Vcc is supplied to a signal line connecting the MCU 1161 and the charge enable terminal of the charging IC 1164 via, for example, a resistor R13 that functions as a pull-up resistor.

Thus, in the inhalation device 100, since the MCU 1161 is connected to the charge enable terminal of the charging IC 1164, the MCU 1161 can control the input to the charge enable terminal of the charging IC 1164 to execute or stop the charging operation of the charging IC 1164. Furthermore, the MCU 1161 can stop the charging of the power source unit 111 by stopping the charging operation of the charging IC 1164.

The MCU 1161 also includes, for example, the LDO (Low drop out) 71, which steps down the first system voltage Vcc supplied to the MCU 1161 to generate the second system voltage Vccl. The LDO 71 is connected, for example, to one end of the heater thermistor TH2, and supplies power having the generated second system voltage Vccl to the heater thermistor TH2.

### (Charging stop circuit)

Incidentally, it is conceivable that the MCU 1161 may stop unintentionally (for example, what is known as a freeze or a breakdown) due to some reason while the power source unit 111 is being charged. From the viewpoint of ensuring the safety of the inhalation device 100, even if the MCU 1161 stops in this way, it is desirable to appropriately stop charging the power source unit 111.

To this end, the inhalation device 100 further comprises a charging stop circuit 80 configured to be capable of stopping the charging operation of the charging IC 1164 without the intervention of the MCU 1161. The charging stop circuit 80 is provided, for example with a switch circuit SW81 that is capable of controlling the input to the charge enable terminal of the charging IC 1164.

In the present example, the switch circuit SW81 is configured by a bias resistor built-in transistor (BRT) including a BJT (bipolar junction transistor) 81A, a resistor 81b, and a resistor 81c. Then, the base of the BJT 81a is connected to the alert terminal of the remaining charge meter IC 1162 via the resistor 81b. The emitter of the BJT 81a is connected to the second system voltage line Lsys2 to which the first system voltage Vcc is supplied, and is also connected to the base of the BJT 81a via the resistor 81c. The collector of BJT 81a is connected to the charge enable terminal of the charging IC 1164. It should be noted that, in the present example, a signal line connecting the collector of BJT 81a and the charge enable terminal of the charging IC 1164 is common with the signal line connecting the MCU 1161 and the charge enable terminal of the charging IC 1164, discussed hereinabove, and is supplied, for example, with the first system voltage Vcc via a resistor R13 that functions as a pull-up resistor.

### [7. Operation of inhalation device]

An example of the operation of the inhalation device 100 will now be described. The MCU 1161 serving as the control unit 116 of the inhalation device 100 causes aerosol to be generated by supplying power from the power source unit 111 to the heater unit 60 (more specifically, the resistor Rheat), serving as the heating unit 121, in response to an aerosol generation request from the user.

Here, the aerosol generation request may be an operation to instruct the start of heating (hereinafter also referred to as a "heating start operation"), for example. The heating start operation may, for example, be pressing of a predetermined operation button (not depicted) provided in the inhalation device 100. Alternatively, the heating start operation may be insertion of a stick-type substrate 150 into the inhalation device 100, or drawing on the inhalation device 100. Moreover, the aerosol generation request is not limited to a direct operation on the inhalation device 100, and may be, for example, reception of predetermined information from another device capable of communicating with the inhalation device 100, such as a smartphone. The MCU 1161 may detect the aerosol generation request on the basis of information acquired by the sensor unit 112 or the communication unit 115, for example.

As a more detailed explanation of aerosol generation, if the inhalation device 100 is the inhalation device 100B shown in fig. 1B, for example, the MCU 1161 serving as the control unit 116B causes an aerosol to be generated by controlling the temperature of the heater unit 60 (that is, the heater temperature), serving as the heating unit 121B, on the basis of a pre-prepared heating profile, upon detection of the heating start operation (e.g., pressing of a predetermined operation button).

More specifically, in the control of the heater temperature (hereinafter, also simply referred to as the "heating control") based on a heating profile, the MCU 1161 acquires the actual heater temperature (hereinafter, also referred to as the "actual temperature") with a predetermined period (for example, every 50 [ms]) on the basis of the HEAT_TEMP signal from the operational amplifier OP, for example. At this time, the MCU 1161 acquires the actual temperature on the basis of the HEAT_TEMP signal from the operational amplifier OP when the switch SW4, which is the low-side switch of the heater unit 60, is turned on, and the switch SW2 of the heating voltage line Lheat is turned off and the switch SW3 of the temperature measurement line Ltemp is turned on. It should be noted that the MCU 1161 can, for example, acquire the actual temperature from the electrical resistance value of the resistor Rheat represented by the HEAT_TEMP signal, using a table or a formula that defines a relationship between the electrical resistance value of the resistor Rheat (in other words, the amount of voltage drop due to the resistor Rheat) and the heater temperature.

The MCU 1161 then controls the power supplied to the heater unit 60 on the basis of the acquired actual temperature and the target temperature at that time, such that the actual temperature approaches the target temperature. At this time, the MCU 1161 may, for example, adjust the duty ratio of power pulses supplied to the heater unit 60 via the heating voltage line Lheat, by controlling the on/off of the switch SW2 in the heating voltage line Lheat in a state in which the switch SW4, which is the low-side switch of the heater unit 60, is turned on.

Furthermore, if the inhalation device 100 is the inhalation device 100A shown in fig. 1, the MCU 1161 serving as the control unit 116A causes an aerosol to be generated by supplying predetermined power to the heater unit 60, serving as the heating unit 121A, when an inhalation action on the inhalation device 100A is detected on the basis of the detection result of a puff sensor, not shown. At this time, the power supplied to the heater unit 60 is predetermined by the manufacturer of the inhalation device 100A such that, for example, a suitable amount of aerosol including an appropriate amount of a flavor component is generated. This allows the flavor tasted by the user to be optimized, making it possible to provide the user with a high-quality smoking experience.

Furthermore, when there is a charging start request from the user, the charging IC 1164 of the inhalation device 100 supplies power from an external power source received via the charging terminal 31 to the power source unit 111, thereby starting charging of the power source unit 111. Here, the charging start request may be the establishment of an electrical connection between the inhalation device 100 and the external power source, for example. Furthermore, the charging start request may further comprise the performance of a predetermined operation once the electrical connection between the inhalation device 100 and the external power source has been established. Pressing a predetermined operation button (not shown) provided in the inhalation device 100 is one possible example of this operation. Furthermore, when the power source unit 111 is being charged, the charging IC 1164 may control the charging current and/or charging voltage for charging the power source unit 111 in accordance with instructions from the MCU 1161.

The remaining charge meter IC 1162 of the inhalation device 100 acquires the battery information with a predetermined period on the basis of a parameter or signal that is input when the power source unit 111 is charging and/or discharging, as described above, and transmits the acquired battery information to the MCU 1161.

In addition, the remaining charge meter IC 1162 detects specific abnormalities in the inhalation device 100, such as the battery temperature abnormality, current value abnormality, and heater temperature abnormality discussed hereinabove, on the basis of parameters or signals that are input when the power source unit 111 is charging and/or discharging.

The remaining charge meter IC 1162 then outputs the abnormality detection signal from the alert terminal when an abnormality is detected. When the remaining charge meter IC 1162 outputs the abnormality detection signal, the switch SW4, which is the low-side switch of the heater unit 60, is turned off. Then, when the switch SW4 is turned off, power is no longer supplied to the heater unit 60, even if the switch SW2 of the heating voltage line Lheat or the switch SW3 of the temperature measurement line Ltemp is on. It is therefore possible to stop the supply of power to the heater unit 60 even if the MCU 1161 stops operating while the switch SW2 or the switch SW3 is on. This makes it possible to restrict the supply of unintended power to the heater unit 60 when the MCU 1161 is not operating normally, thereby ensuring the safety of the inhalation device 100.

Furthermore, when the remaining charge meter IC 1162 outputs the abnormality detection signal, the switch circuit 81 of the charging stop circuit 80 is turned on. When the switch circuit 81 is turned on, the input to the charge enable terminal of the charging IC 1164 is set to the high level, and the charging operation of the charging IC 1164 is stopped. When the charging IC 1164 stops the charging operation, charging of the power source unit 111 stops. Therefore, even if the MCU 1161 stops while the power source unit 111 is being charged, charging of the power source unit 111 can be stopped appropriately, making it possible to ensure the safety of the inhalation device 100.

Furthermore, when the remaining charge meter IC 1162 outputs the abnormality detection signal, the abnormality detection signal can be input to the MCU 1161. That is, the remaining charge meter IC 1162 can notify the MCU 1161 that an abnormality has occurred in the inhalation device 100 by means of the abnormality detection signal. Therefore, if the MCU 1161 can operate normally when an abnormality has been detected, the MCU 1161 can execute appropriate processing, such as processing to be performed when an abnormality occurs, on the basis of the abnormality detection signal received from the remaining charge meter IC, for example stopping the charging operation of the charging IC 1164 to stop the charging of the power source unit 111, or turning off the switch SW4 to stop the supply of power to the heater unit 60, thereby making it possible to ensure the safety of the inhalation device 100.

It should be noted that the circuit configuration shown in fig. 9 is merely an example, and is not limiting Another circuit configuration of the inhalation device 100 will be described below.

### 6-2. Second Example of Circuit Configuration of Inhalation Device

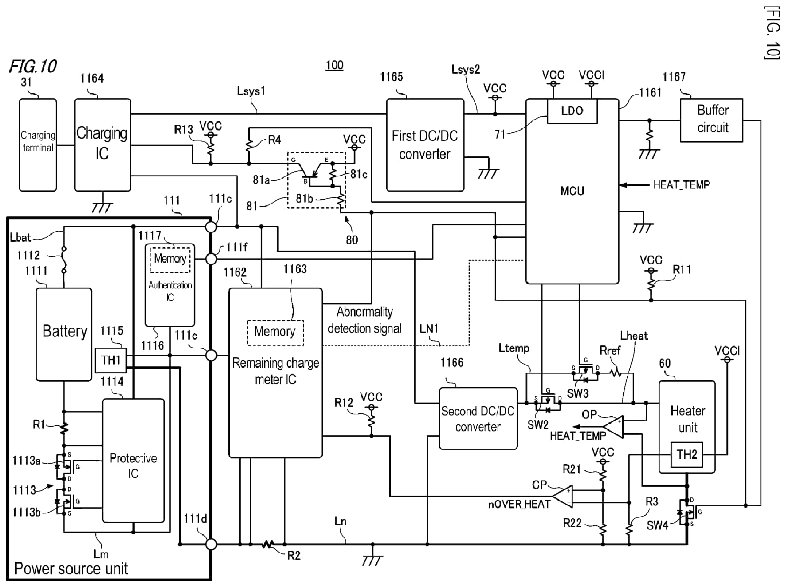

Fig. 10 is a view showing a second example of the circuit configuration of the inhalation device 100. Note that, in this section, the focus is on the areas that differ from those described in fig. 9, and the areas that are common to those described in fig. 9 will be omitted or simplified as appropriate.

In the second example shown in fig. 10, the power source unit 111 further comprises: an authentication unit, specifically an authentication IC 1116 having a memory 1117 storing information indicative of a power supply ID (hereinafter, also referred to as the "power supply ID information") which is an identifier able to uniquely identify the power source unit 111; and an SD terminal 111f. The memory 1117 is for example configured by an EPROM (Erasable Programmable Read Only Memory) or a non-volatile memory such as a flash memory.

In the second example shown in fig. 10, the positive terminal of the battery 1111 is connected to the power supply voltage line Lbat, and the negative terminal of the battery 1111 is connected to the negative voltage line Lm, which is a different power line from the power supply voltage line Lbat and the ground line Ln.

The protective IC 1114 is connected to both ends of a resistor R1 having a predetermined electrical resistance value, provided to a negative voltage line Lm. As a result, the amount of voltage drop due to the resistor R1 is input to the protective IC 1114. The protective IC 1114 then acquires the current value of the current flowing through the negative voltage line Lm on the basis of the amount of voltage drop due to the resistor R1, and can control a switch circuit 1113 provided to the ground line Ln on the basis of this current value.

Further, by connecting the protective IC 1114 to the power supply voltage line Lbat, the power supply voltage is input to the protective IC 1114.

The authentication IC 1116 is connected to the MCU 1161 via an SD terminal 111f. That is, the authentication IC 1116 is supplied with a drive voltage from the MCU 1161 via a terminal of the connection portion 20x connected to the SD terminal 111f, as well as being configured to enable communication. The SD terminal 111f doubles as a power terminal and a communication terminal.

The authentication IC 1116 transmits the power supply ID information to the MCU 1161 at a predetermined timing. More specifically, the authentication IC 1116 is configured to be capable of communicating with the MCU 1161, for example by means of an I2C (inter-integrated circuit) or the like, and utilizes this communication to transmit the power supply ID information to the MCU 1161. An example of the timing at which the authentication IC 1116 transmits the power supply ID information can be the timing at which the power source unit 111 is replaced, but is not limited thereto, and may be when a predetermined operation is further improved after the replacement of the power source unit 111, for example. Pressing a predetermined operation button (not shown) provided in the inhalation device 100 is one possible example of this operation. Furthermore, communication between the authentication IC 1116 and the MCU 1161 is not limited to I2C, and any communication method may be employed.

The ground terminal of the protective IC 1114 and the ground terminal of the authentication IC 1116 are connected to the negative voltage line Lm.

Also, one end of the battery thermistor 1115 is connected to the negative voltage line Lm and to the remaining charge meter IC 1162. The other end of the battery thermistor 1115 is connected to the ground line Ln. As a result, the electrical resistance value of the battery thermistor 1115 (in other words, the amount of voltage drop due to the battery thermistor 1115) is input to the remaining charge meter IC 1162 as a parameter related to the temperature of the power source unit 111. The remaining charge meter IC 1162 then acquires the battery temperature on the basis of the electrical resistance value of the battery thermistor 1115.

The MCU 1161 is also capable of performing a genuine product check in addition to the various checks previously described in the operation check.

Here, the genuine product check is the process of checking whether the power supply ID information stored in the memory 1117 of the authentication IC 1116 of the replaced power source unit 111 is genuine. Specifically, in the genuine product check, the MCU 1161 compares the power supply ID information of the memory 1117 of the authentication IC 1116 with the power supply ID information stored in the memory of the MCU 1161, and checks that the replaced power source unit 111 is genuine.

If the genuine check described above detects that the replaced power source unit 111 is not genuine, the MCU 1161 prohibits heating by the heating unit 121, prohibits charging of the power source unit 111, or prohibits both the heating by the heating unit 121 and the charging of the power source unit 111, for example. The MCU 1161 may also control the previously described notification unit 113 (e.g., light emitting device, display device, vibrating device) to make a predetermined notification, for example. In this case, the predetermined notification includes a notification that the replaced power source unit 111 is not genuine, a notification prompting to replace the replaced power source unit 111 with a genuine power source unit 111, a confirmation of whether the user authorizes use of the replaced power source unit 111 after informing the user that the replaced power source unit 111 is not genuine, etc.

According to the circuit configuration of the second example configured in this way, it is possible to determine whether the replaced power source unit 111 is suitable for the inhalation device 100 based on the power supply ID information of the power source unit 111 stored in the memory 1117 of the authentication IC 1116, and inhibit the inappropriate power source unit 111 being mounted and causing faults in the inhalation device 100.

Also, the authentication IC 1116 is supplied with a drive voltage from the MCU 1161 via the SD terminal 111f, and it is not necessary to supply the drive power to the authentication IC 1116 from the battery 1111 inside the power source unit 111; thus, power consumption of the battery 1111 can be suppressed in a state where the battery is not accommodated in the inhalation device 100. Also, if the protective IC 1114 of the power source unit 111 is actuated and the circuit is disconnected, the drive power can be supplied to the protective IC 1114 via the SD terminal 111f, even if the remaining charge IC 1162 outputs an abnormality detection signal and stops the charging operation of the charging IC 1164, for example.

Furthermore, the SD terminal 111f doubles as a power terminal and a communication terminal, and thus the number of terminals of the connection portion 20x can be reduced. Additionally, the MCU 1161 is able to perform connection detection with or without the establishment of a communication line via this SD terminal 111f. As previously described, the MCU 1161 can detect that the power source unit 111 is connected to the connection portion 20x based on a potential difference between the positive terminal connection portion 20a (positive terminal 111c) and the negative terminal connection portion 20b (negative terminal 111d), but it is difficult to determine, from the power supply voltage, a non-connection state of the power source unit 110, and a state in which the power source unit 111 is connected but the battery 1111 is deeply discharged. However, according to the present example, it can be determined that the power source unit 111 is connected by the establishment of a communication line via the SD terminal 111f. Thus, the MCU 1161 can distinguish between an unconnected state of the power source unit 111 and a state in which the power source unit 111 is connected but the battery 1111 is deeply discharged.

It should be noted that the memory in which the power supply ID information is stored does not necessarily need to be the memory 1117 of the authentication IC 1116, and may be the memory of another IC packaged in the power source unit 111, or is not particularly limited as long as the MCU 1161 is a memory accessible by the MCU 1161.

### 6-3. Third Example of Circuit Configuration of Inhalation Device

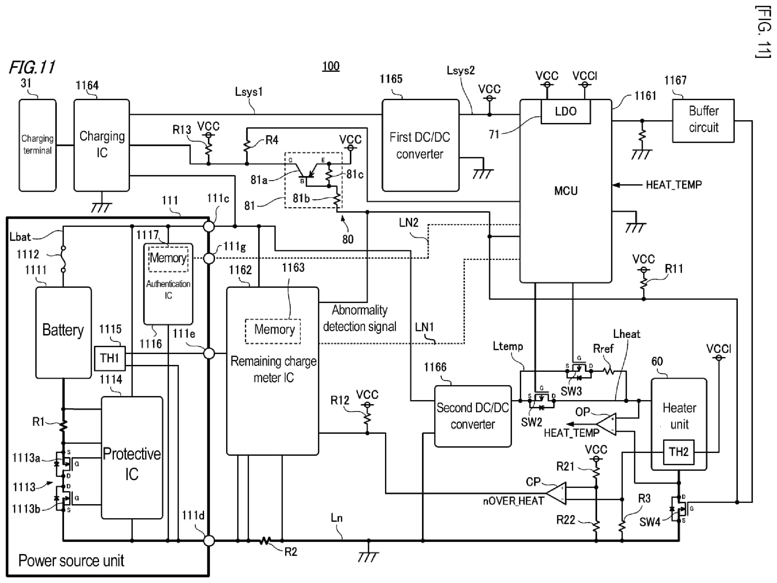

Fig. 11 is a diagram showing a third example of the circuit configuration of the inhalation device 100. Note that, in this section, the focus is on the areas that differ from those described in fig. 9, and the areas that are common to those described in fig. 9 will be omitted or simplified as appropriate.

In the third example shown in fig. 11, the power source unit 111 further comprises: an authentication IC 1116 having a memory 1117 storing power supply ID information, which is an identifier able to uniquely identify the power source unit 111; and a communication terminal 111g. The authentication IC 1116 is as described in the second example shown in fig. 10 and will therefore not be described again.

The remaining charge meter IC 1162 is connected to the power source voltage line Lbat. That is, the authentication IC 1116 is supplied with a power supply voltage from the battery 1111 as the drive voltage, and the authentication IC 1116 is driven by the power supply voltage. Also, the authentication IC 1116 is connected to the MCU 1161 via the communication terminal 111g by a communication line LN2 for serial communication.

According to the circuit configuration of the third example configured in this way, drive power is supplied from the battery 1111, and thus a highly versatile memory can be utilized. Additionally, the MCU 1161 is able to perform connection detection with or without the establishment of a communication line via this communication terminal 111g. Thus, in the present example as well, the MCU 1161 can distinguish between an unconnected state of the power source unit 111 and a state in which the power source unit 111 is connected but the battery is deeply discharged.

### 6-4. Fourth Example of Circuit Configuration of Inhalation Device

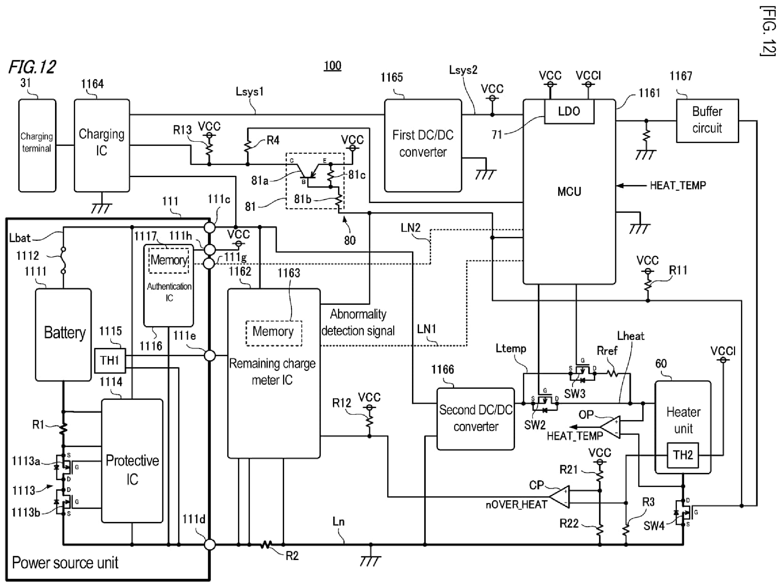

Fig. 12 is a view showing the fourth example of the circuit configuration of the inhalation device 100. Note that, in this section, the focus is on the areas that differ from those described in fig. 11, and the areas that are common to those described in fig. 11 will be omitted or simplified as appropriate.

In the fourth example shown in fig. 12, the power source unit 111 further comprises: an authentication IC 1116 having a memory 1117 storing power supply ID information, which is an identifier able to uniquely identify the power source unit 111; and a communication terminal 111g and a power terminal 111h. The authentication IC 1116 is as described in the second example shown in fig. 10 and will therefore not be described again.

The authentication IC 1116 of the present example is supplied with the first system voltage Vcc via a terminal of the connection portion 20x which is connected to the power terminal 111h. That is, in the fourth example shown in fig. 12, the authentication IC 1116 is supplied with the first system voltage Vcc, which is supplied to the MCU 1161, etc. as a drive voltage, and the authentication IC 1116 is driven by the first system voltage Vcc. Also, the authentication IC 1116 is connected to the MCU 1161 via the communication terminal 111g by a communication line LN2 for serial communication.

According to the circuit configuration of the fourth example configured in this way, a stable first system voltage Vcc is supplied from the inhalation device 100, and thus a highly versatile memory can be utilized. Additionally, the MCU 1161 is able to perform connection detection with or without the establishment of a communication line via the communication terminal 111g. Thus, in the present example as well, the MCU 1161 can distinguish between an unconnected state of the power source unit 111 and a state in which the power source unit 111 is connected but the battery is deeply discharged.

### 6-5. Fifth Example of Circuit Configuration of Inhalation Device

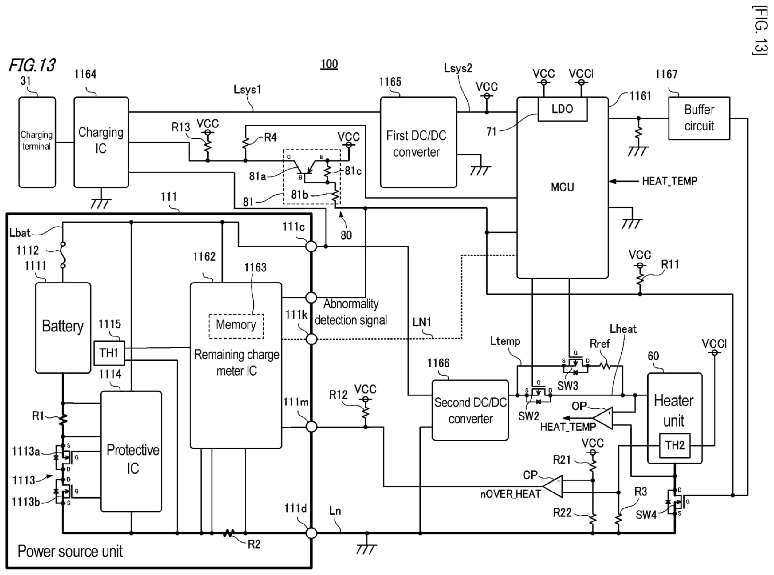

Fig. 13 is a diagram showing a fifth example of the circuit configuration of the inhalation device 100. Note that, in this section, the focus is on the areas that differ from those described in fig. 9, and the areas that are common to those described in fig. 9 will be omitted or simplified as appropriate.

In the first example shown in fig. 9, the remaining charge meter IC 1162 was provided on the main body side board unit 90, but in the fifth example shown in fig. 13, the remaining charge meter IC 1162 may be provided on the power source unit 111. The remaining charge meter IC 1162 may also be used as an authentication unit. For example, the memory 1163 of the remaining charge meter IC 1162 is used as a memory for authentication and stores the power supply ID information. That is, the remaining charge meter IC 1162 is packaged with the battery 1111 in the replaceable power source unit 111.

In the fifth example shown in fig. 13, the power source unit 111 further comprises a remaining charge meter IC 1162 having a memory 1163, and a communication terminal 111k and a power terminal 111m. The memory 1163 stores power supply ID information, which is an identifier that can uniquely identify the power source unit 111. The remaining charge meter IC 1162 is as described in the first example shown in fig. 9 and will therefore not be described again.

The remaining charge meter IC 1162 of the present example is supplied with the first system voltage Vcc via a terminal of the connection portion 20x which is connected to the power terminal 111m. That is, in the fifth example shown in fig. 13, the remaining charge meter IC 1162 is supplied with the first system voltage Vcc, which is supplied to the MCU 1161, etc. as a drive voltage, and the remaining charge meter IC 1162 is driven by the first system voltage Vcc. Also, the remaining charge meter IC 1162 is connected to the MCU 1161 via the communication terminal 111k by a communication line LN1 for serial communication.

By using the memory 1163 of the remaining charge meter IC 1162 as the memory for authentication in this way, the memory for authentication can be eliminated. Also, by packaging the battery 1111 and the remaining charge meter IC 1162, the remaining charge meter IC 1162 stores battery information relating to the packaged battery 1111. Namely, because the remaining charge meter IC 1162 stores the remaining battery charge and SOH of the packaged battery 1111, the reset process, update process, re-measurement process, etc. associated with replacement of the power source unit 111 become unnecessary.

The remaining charge meter IC 1162 may also derive the remaining battery charge corresponding to the current combination of power source voltage and battery temperature using a table or calculation defining the relationship between the combination of power source voltage and battery temperature and the remaining battery charge, as previously described. If the remaining charge meter IC 1162 is integrated into the power source unit 111, the table or formula of the remaining charge meter IC 1162 can be set up when manufacturing the power source unit 111 depending on the battery 1111. On the other hand, if the remaining charge meter IC 1162 is mounted on the main body side board unit 90, when the power source unit 111 is replaced, the table or formula of the remaining charge meter IC 1162 must also be reset depending on the battery 1111 of the power source unit 111. In this way, by providing a remaining charge meter IC 1162 in the power source unit 111, different types of batteries 1111 can be easily packaged.

In addition to acquiring and storing battery information such as battery remaining charge and SOH, the remaining charge meter IC 1162 can detect at least one among a battery temperature abnormality, current value abnormality, and heater temperature abnormality as described above based on a parameter or signal input when charging and/or discharging of the power source unit 111 is being performed, similarly to when the remaining charge mater IC was provided to the main body side board unit 90, and can perform protective control for stopping power supply to the heating unit 121 and/or charging of the power source unit 111.

Namely, the remaining charge meter IC 1162 outputs an abnormality detection signal from an alert terminal when an abnormality is detected, as shown in fig. 13. When the abnormality detection signal is output from the remaining charge meter IC 1162, the switch SW4 turns off the supply of power to the heater unit 60 in response to the abnormality detection signal from the remaining charge meter IC 1162. As a result, the supply of power to the heater unit 60 (that is, the heating unit 121) can be switched off by means of the abnormality detection signal from the remaining charge meter IC 1162. As a result, the supply of power to the heater unit 60 can be turned off even if the MCU 1161 is in a state in which it cannot operate normally when an abnormality is detected in the inhalation device 100, thereby restricting the supply of unintended power to the heater unit 60 and improving the safety of the inhalation device 100.

Furthermore, when an abnormality is detected during charging of the power source unit 111, the remaining charge meter IC 1162 outputs the abnormality detection signal from the alert terminal. When the abnormality detection signal is output from the remaining charge meter IC 1162, the switch circuit 81 of the charging stop circuit 80 is turned on. When the switch circuit 81 is turned on, the input to the charge enable terminal of the charging IC 1164 is set to the high level, and the charging operation of the charging IC 1164 is stopped. As a result, even if an abnormality is detected while the power source unit 111 is being charged but the MCU 1161 is in a state in which it cannot operate normally when the abnormality is detected, it is possible to stop the charging of the power source unit 111, thereby improving the safety of the inhalation device 100.

In this embodiment, the protective control is implemented in the remaining charge meter IC 1162 packaged in the power source unit 111, but is not limited to this, and the protective control may be implemented in the authentication IC 1116 shown in fig. 10-12.

An embodiment of an aerosol generation device according to the present disclosure was described above, but it goes without saying that the present disclosure is not limited to such an embodiment. It is obvious that a person skilled in the art will be able to conceive of a number of variant examples or modified examples within the scope disclosed in the claims, and any such variant examples or modified examples are naturally understood to fall within the technical scope of the present disclosure. Furthermore, the components in the embodiments described above may be combined in any way within a scope that does not depart from the essential point of the invention.

The present specification, etc. sets forth at least the following features. Corresponding components, etc. in the embodiments described above are shown by way of example in parentheses, but there is no limitation to such components.
(1) An aerosol generation device (inhalation device 100, 100A, 100B) for generating an aerosol by heating an aerosol source, the aerosol generation device comprising:
   a power source unit (power source unit 111, 111A, 111B) configured to be capable of supplying power to a heating unit (heating unit 121, 121A, 121B; heater unit 60);
   a board (main body side board unit 90) on which a control element (MCU 1161) controlling the supply of power to the heating unit is mounted; and
   a case (case 20) having a power source accommodating portion (power source accommodating portion 200) accommodating the power source unit and a board accommodating portion (board accommodating portion 210) accommodating the board, wherein
   the case includes
   a connection portion (connection portion 20x) to which the power source unit is connected, and
   a regulator (regulator 29) restricting intrusion of the power source unit into the board accommodating portion,
   the regulator is arranged at least between the power source accommodating portion and a mounting section of the control element when viewed from the power source accommodating portion, and
   the power source unit has a battery (battery 1111) and a protective circuit (protective IC 1114, switch circuit 1113), and is removably arranged in the power source accommodating portion.

According to (1), the power source unit in which the battery and protective circuit are packaged is configured to be insertable to and removable from the power source accommodating portion of the case, and thus a user is able to replace a depleted or faulty power source unit. The regulator is arranged in the case between the power source accommodating portion and the mounting section of the control element, and thus access to the mounting section of the control element on the board when the power source unit is replaced is restricted. Thus, the power source unit can be safely replaced. Also, since the protective circuit is provided to the power source unit, the circuit can be interrupted upstream of the connection portion when an overcurrent is detected, improving safety.

(2) The aerosol generation device according to (1), wherein
the power source unit further includes a temperature element (battery thermistor 1115).

According to (2), the temperature element can be arranged in the vicinity of the battery by packaging the temperature element in the power source unit. Therefore, it is possible to accurately measure the temperature of the battery.

(3) The aerosol generation device according to (1) or (2), wherein
the case is closed off by a cover (bottom wall portion 21, panel 30) capable of opening and closing an opening (opening 24),
in an insertion direction of the power source unit inserted through the opening, the power source accommodating portion and the board accommodating portion are provided in this order from the opening, and
the regulator is a dividing wall portion (dividing wall portion 27) arranged between the power source accommodating portion and the board accommodating portion in the insertion direction.

According to (3), when replacing the power source unit, the dividing wall portion makes it possible to avoid the power source unit, fingers, etc. making contact with the control element on the board.

(4) The aerosol generation device according to (3), wherein
the dividing wall portion has a communication portion (communication portion 25) which communicates the power supply accommodating portion and the board accommodating portion, and
an area of the communication portion orthogonal to the insertion direction is smaller than an area of the power source unit orthogonal to the insertion direction.

According to (4), even when a communication portion is provided in the dividing wall portion, it is possible to avoid the power source unit making contact with the control element, etc. on the board via the communication portion.

(5) The aerosol generation device according to any one of (1) to (4), wherein
the case is closed off by a cover (bottom wall portion 21, panel 30) capable of opening and closing an opening (opening 24), and
the regulator is provided integrally to the case, or is provided separately from the case and attached to the case.

According to (5), when the regulator is attached to the power source unit, there is a risk that the regulator will contact the control element, etc. on the board when the power supply unit is replaced, but since the regulator is attached to the case, the regulator can avoid contacting the control element, etc. on the board.

(6) The aerosol generation device according to any one of (1) to (4), wherein
the power source unit further includes a memory (memory 1117, memory 1163) configured to store identification information of the power source unit.

According to (6), it is possible to determine whether the replaced power source unit is suitable for the inhalation device based on the power supply identification information of the power source unit stored in the memory, and inhibit an inappropriate power source unit being mounted and causing faults in the inhalation device.

(7) The aerosol generation device according to (6), wherein
the memory is supplied with a drive voltage from the connection portion.

According to (7), it is not necessary to supply drive power to the memory from the battery inside the power source unit; thus, power consumption of the battery can be suppressed in a state where the battery is not accommodated in the inhalation device. Furthermore, even if the protective circuit of the power source unit is activated and the circuit is disconnected, the drive power may be supplied via the connection portion.

(8) The aerosol generation device according to (7), wherein
the power source unit includes a terminal (SD terminal 111f) connecting the memory and the control element, and
the terminal to which the drive voltage is supplied doubles as a communication terminal.

According to (8), the power terminal and the communication terminal are the same, and the number of terminals of the connection portion can be reduced. Additionally, it is possible to perform connection detection with or without the establishment of a communication line via this terminal. In particular, it is difficult to determine, from the power supply voltage, a non-connection state of the power source unit, and a state in which the power source unit is connected but the battery is deeply discharged; however, the establishment of a communication line via this terminal makes it possible to determine a state in which the power source unit is connected but the battery is deeply discharged.

(9) The aerosol generation device according to (7), wherein
the drive voltage is a system voltage (first system voltage Vcc) supplied to the control element.

According to (9), a stable system voltage is supplied, and thus a highly versatile memory can be utilized.

(10) The aerosol generation device according to (6), wherein
the memory is supplied with a drive voltage from the battery.

According to (10), a highly versatile memory can be utilized. Additionally, it is possible to perform connection detection with or without the establishment of a communication line via a communication terminal connected to the memory. In particular, it is difficult to determine, from the power supply voltage, a non-connection state of the power source unit, and a state in which the power source unit is connected but the battery is deeply discharged; however, the establishment of a communication line via a communication terminal makes it possible to determine a state in which the power source unit is connected but the battery is deeply discharged.

(11) The aerosol generation device according to any one of (6) to (10), wherein
the aerosol generation device further comprises a remaining charge meter (remaining charge meter IC 1162) configured to be able to acquire information indicative of a remaining charge of the battery, and
the memory is provided to the remaining charge meter.

According to (11), a memory for authentication becomes unnecessary due to using the memory of the remaining charge meter configured to be able to acquire information indicative of the remaining charge of the battery. Also, by packaging the battery and the remaining charge meter, the remaining charge meter stores information about the packaged battery, and thus there is no need to update the memory of the remaining charge meter or re-measure when the power source unit is replaced.

(12) The aerosol generation device according to (11), wherein
the remaining charge meter is further configured to be able to acquire a parameter or a signal relating to the temperature of the heating unit, and detect an abnormality relating to the temperature of the heating unit on the basis of the parameter or the signal.

According to (12), it is possible to utilize the remaining charge meter for acquiring information indicative of the remaining charge of the battery, so that it is possible to detect an abnormality relating to the temperature of the heating unit.

(13) The aerosol generation device according to (12), wherein
the aerosol generation device further comprises a switch (switch SW4) for turning on and off the supply of power to the heating unit,
the remaining charge meter further outputs an abnormality detection signal to the switch when the abnormality is detected, and
the switch turns off the supply of power to the heating unit in response to the abnormality detection signal.

According to (13), the supply of power to the heating unit can be switched off by means of the abnormality detection signal from the remaining charge meter. As a result, the supply of power to the heating unit can be turned off even if the MCU is in a state in which it cannot operate normally when an abnormality is detected in the aerosol generation device, thereby restricting the supply of unintended power to the heating unit and improving the safety of the power supply unit.

(14) The aerosol generation device according to (12) or (13), wherein
the power source unit is further configured to be capable of being charged by means of power received from an external power source, and
the remaining charge meter stops charging of the power source unit if the abnormality is detected during charging of the power source unit.

According to (14), even if an abnormality is detected while the power source unit is being charged but the MCU is in a state in which it cannot operate normally when the abnormality is detected, it is possible to stop the charging of the power source unit, thereby improving the safety of the aerosol generation device.

(15) The aerosol generation device according to any one of (6) to (10), wherein
the aerosol generation device further comprises an authentication IC (authentication IC 1116) having the memory, and
the authentication IC is further configured to be able to acquire a parameter or a signal relating to the temperature of the heating unit, and detect an abnormality relating to the temperature of the heating unit on the basis of the parameter or the signal.

According to (15), it is possible to utilize the authentication IC to detect an abnormality relating to the temperature of the heating unit.

### REFERENCE SIGNS LIST

20 Case
20x Connection portion
24 Opening
25 Communication portion
27 Dividing wall portion
29 Regulator
90 Main body side board unit (board)
100, 100A, 100B Inhalation device (aerosol generation device)
110 Power supply unit
111, 111A, 111B Power source unit (power source unit)
111f SD terminal (terminal)
121, 121A, 121B Heating unit
200 Power source accommodating portion
210 Board accommodation portion
1111 Battery
1113 First switch circuit (protective circuit)
1114 Protective IC (protective circuit)
1115 battery thermistor (temperature element)
1116 Authentication IC
1161 MCU (control element)
1162 Remaining charge meter IC (remaining charge meter)
1164 Charging IC
SW4 Switch
Vcc First system voltage (system voltage)

## Claims

1. an aerosol generation device for generating an aerosol by heating an aerosol source, the aerosol generation device comprising:
a power source unit configured to be capable of supplying power to a heating unit;
a board on which a control element controlling the supply of power to the heating unit is mounted; and
a case having a power source accommodating portion accommodating the power source unit and a board accommodating portion accommodating the board, wherein
the case includes
a connection portion connected to which the power source unit is connected, and
a regulator restricting intrusion of the power source unit into the board accommodating portion,
the regulator is arranged at least between the power source accommodating portion and a mounting section of the control element when viewed from the power source accommodating portion, and
the power source unit has a battery and a protective circuit, and is removably arranged in the power source accommodating portion.

2. The aerosol generation device according to claim 1, wherein
the power source unit further includes a temperature element.

3. The aerosol generation device according to claim 1 or 2, wherein
the case is closed off by a cover capable of opening and closing an opening, and
in an insertion direction of the power source unit inserted through the opening, the power source accommodating portion and the board accommodating portion are provided in this order from the opening, and
the regulator is a dividing wall portion arranged between the power source accommodating portion and the board accommodating portion in the insertion direction.

4. The aerosol generation device according to claim 3, wherein
the dividing wall portion has a communication portion which communicates the power supply accommodating portion and the board accommodating portion, and
an area of the communication portion orthogonal to the insertion direction is smaller than an area of the power source unit orthogonal to the insertion direction.

5. The aerosol generation device according to any one of claims 1 to 4, wherein
the case is closed off by a cover capable of opening and closing an opening, and
the regulator is provided integrally to the case, or is provided separately from the case and attached to the case.

6. The aerosol generation device according to any one of claims 1 to 4, wherein
the power source unit further includes a memory configured to store identification information of the power source unit.

7. The aerosol generation device according to claim 6, wherein
the memory is supplied with a drive voltage from the connection portion.

8. The aerosol generation device according to claim 7, wherein
the power source unit includes a terminal connecting the memory and the control element, and
the terminal to which the drive voltage is supplied doubles as a communication terminal.

9. The aerosol generation device according to claim 7, wherein
the drive voltage is a system voltage supplied to the control element.

10. The aerosol generation device according to claim 6, wherein
the memory is supplied with a drive voltage from the battery.

11. The aerosol generation device according to any one of claims 6 to 10, wherein
the aerosol generation device further comprises a remaining charge meter configured to be able to acquire information indicative of a remaining charge of the battery, and
the memory is provided to the remaining charge meter.

12. The aerosol generation device according to claim 11, wherein
the remaining charge meter is further configured to be able to acquire a parameter or a signal relating to the temperature of the heating unit, and detect an abnormality relating to the temperature of the heating unit on the basis of the parameter or the signal.

13. The aerosol generation device according to claim 12, wherein
the aerosol generation device further comprises a switch for turning on and off the supply of power to the heating unit,
the remaining charge meter further outputs an abnormality detection signal to the switch when the abnormality is detected, and
the switch turns off the supply of power to the heating unit in response to the abnormality detection signal.

14. The aerosol generation device according to claim 12 or 13, wherein
the power source unit is further configured to be capable of being charged by means of power received from an external power source, and
the remaining charge meter stops charging of the power source unit if the abnormality is detected during charging of the power source unit.

15. The aerosol generation device according to any one of claims 6 to 10, wherein
the aerosol generation device further comprises an authentication IC having the memory, and
the authentication IC is further configured to be able to acquire a parameter or a signal relating to the temperature of the heating unit, and detect an abnormality relating to the temperature of the heating unit on the basis of the parameter or the signal.
